# EUROPEAN PATENT APPLICATION

(11) **EP 4 844 634 A1**
(43) Date of publication of application: **25.11.2026**
(21) Application number: 25810182.3
(22) Date of filing: 08.05.2025
(51) Int. Cl.: G06N 3/0475, G06N 3/0495, G06F 16/3349, G06F 40/284, G06F 40/30, G06N 3/045, G06N 3/063

(54) **METHOD FOR IMPROVING PROCESSING EFFICIENCY OF GENERATIVE MODEL, AND ELECTRONIC DEVICE FOR PERFORMING SAME**

(30) Priority: 08.05.2024 KR 20240060765; 19.07.2024 KR 20240095886
(71) Applicant: Samsung Electronics Co., Ltd., Suwon-si, Gyeonggi-do 16677 (KR)
(72) Inventor: LEE, Dongseop, Suwon-si, Gyeonggi-do 16677 (KR); HAN, Youngho, Suwon-si, Gyeonggi-do 16677 (KR); KO, Hyeonmok, Suwon-si, Gyeonggi-do 16677 (KR); KIM, Munjo, Suwon-si, Gyeonggi-do 16677 (KR); LEE, Kyenghun, Suwon-si, Gyeonggi-do 16677 (KR)
(74) Representative: Gulde & Partner
(86) International application number: PCT/KR2025/006176
(87) International publication number: WO 2025/234782

(57) **Abstract**

A processing method of a generative model includes: obtaining a prompt; simplifying the prompt into a simplified prompt including an intent and details; searching for stored records of a previously performed tasks, based on the intent of the simplified prompt; based on identifying a stored record of a previously performed task corresponding to the intent of the simplified prompt, executing the generative model according to the simplified prompt using an intermediate computation result corresponding to the previously performed task; and outputting an execution result of the generative model.

## Description

### TECHNICAL FIELD

The disclosure relates to a method of improving processing efficiency of a generative model and an electronic device for performing the method, and more particularly, to a method of improving processing efficiency by reducing an amount of computation performed by a generative model and reducing an amount of data transferred between memories during processing.

### BACKGROUND ART

Generative artificial intelligence (AI) technology is widely used in various fields, such as summarizing text, answering questions, translation, generating images, and the like.

An example operating method of a generative AI is described as follows. When a user inputs a prompt, which is an instruction including a request or question, into a generative model, the generative model may generate a response corresponding to the prompt by performing computations between a matrix corresponding to the input prompt and matrices included in layers of the generative model.

Because the generative model includes a plurality of matrices, the generative model may require a large amount of computation when processing a prompt. When the length of a prompt increases, the size of matrix corresponding to the prompt may increase, and may thereby rapidly increase the amount of computation. In addition, when the amount of computation increases, an amount of data transferred between memories during a process of performing the computation by the generative model may also increase, causing the processing time to be increased.

### DISCLOSURE OF INVENTION

### SOLUTION TO PROBLEM

Aspects will be set forth in part in the description which follows and, in part, will be apparent from the description, or may be learned by practice of the presented embodiments.

According to an aspect of the disclosure, a processing method of a generative model may include: obtaining a prompt; simplifying the prompt into a simplified prompt including an intent and details; searching for stored records of previously performed tasks, based on the intent of the simplified prompt; based on identifying a stored record of a previously performed task corresponding to the intent of the simplified prompt, executing the generative model according to the simplified prompt using an intermediate computation result corresponding to the previously performed task; and outputting an execution result of the generative model.

According to an aspect of the disclosure, an electronic device may include: a memory storing at least one instruction; and at least one processor, where the at least one processor is configured to execute the at least one instruction stored in the memory to cause the electronic device to: obtain a prompt; simplify the prompt into a simplified prompt including an intent and details; search for stored records of previously performed tasks, based on the intent of the simplified prompt; based on identifying a stored record of a previously performed task corresponding to the intent of the simplified prompt, execute a generative model according to the simplified prompt using an intermediate computation result corresponding to the previously performed task; and output an execution result of the generative model.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram for explaining modules included in an electronic device according to an embodiment of the disclosure;
FIG. 2 is a diagram illustrating a hardware configuration included in an electronic device according to an embodiment of the disclosure;
FIG. 3 is a diagram for explaining detailed modules included in a token reasoner of FIG. 1 according to an embodiment of the disclosure;
FIG. 4 is a diagram illustrating an overall flow of simplifying a prompt and executing the simplified prompt, according to an embodiment of the disclosure;
FIG. 5 is a diagram illustrating a method of simplifying a prompt by extracting key tokens from among tokens included in a prompt and reducing the number of tokens indicating intent, according to an embodiment of the disclosure;
FIG. 6 is a diagram illustrating a method of simplifying a prompt by performing vector quantization on tokens indicating intent, according to an embodiment of the disclosure;
FIG. 7 is a diagram illustrating a method of simplifying a prompt by performing vector quantization on a vector corresponding to an entire prompt, according to an embodiment of the disclosure;
FIG. 8 is a diagram illustrating a method of simplifying a prompt by using a language model, according to an embodiment of the disclosure;
FIG. 9 is a diagram illustrating a method of simplifying an input sequence including input data and a prompt when a generative model supports a multimodal input, according to an embodiment of the disclosure;
FIGS. 10, 11, 12, 13, 14, 15, 16, and 17 are diagrams illustrating methods by which an electronic device searches a task history based on the intent of a prompt and executes a generative model by using an intermediate computation result of a previously performed task according to one or more embodiments of the disclosure;
FIG. 18 is a diagram for explaining a process in which a generative model performs a complete computation according to an embodiment of the disclosure;
FIGS. 19 and 20 are diagrams for explaining a process in which a generative model performs a partial computation by using hidden state matrices stored in a process of performing a previous task, according to one or more embodiments of the disclosure; and
FIGS. 21, 22, 23, 24, 25, 26, 27 and 28 are flowcharts illustrating a method of improving processing efficiency of a generative model according to one or more embodiments of the disclosure.

### MODE FOR THE INVENTION

Throughout the disclosure, the expression "at least one of a, b or c" indicates only a, only b, only c, both a and b, both a and c, both b and c, all of a, b, and c, or variations thereof.

In the description, descriptions of technical contents that are well known in the technical field to which the disclosure belongs are omitted. This is to convey the gist of the disclosure more clearly without obscuring the gist by omitting unnecessary explanations. Also, terms described below are terms defined by considering the functions in the disclosure, and may vary depending on the intention or custom of a user or an operator. Therefore, the definition should be based on the contents throughout the disclosure.

For the same reason, some components in the accompanying drawings are exaggerated, omitted, or schematically shown. In addition, size of each component does not entirely reflect its actual size. Like reference numerals in the drawings denote like elements.

Advantages and features of the disclosure and methods of achieving the same will be apparent with reference to embodiments and drawings described below in detail. The disclosure may, however, be embodied in many different forms and should not be construed as being limited to the embodiments set forth herein. The disclosed embodiments are provided so that the disclosure will be through and complete, and will full convey the scope of the disclosure to those skilled in the art to which the disclosure pertains. An embodiment may be defined by the claims. Throughout the disclosure, like reference numerals in the drawings denote like elements. In addition, in the description of an embodiment of the disclosure, certain detailed descriptions of a related function or configuration are omitted when it is deemed that they may unnecessarily obscure the gist of the disclosure.

In an embodiment of the disclosure, each block of a flowchart diagram and combinations of flowchart diagrams may be performed by computer program instructions. The computer program instructions may be embedded in a processor of a general-purpose computer, special-purpose computer, or other programmable data processing apparatus, and the instructions, when executed by the processor of the computer or other programmable data processing apparatus, may create means for performing the functions described in the flowchart block(s). The computer program instructions may also be stored in a computer usable or computer readable memory that can direct a computer or other programmable data processing device to implement a function in a particular manner, and the instructions stored in the computer usable or computer readable memory may also produce an article of manufacture that includes instruction means for performing the function described in the flowchart block(s). The computer program instructions may also be embedded in a computer or other programmable data processing devices.

In addition, each block in the flowchart diagram may represent a module, segment, or portion of code that includes one or more executable instructions for performing a specific logical function(s). In an embodiment of the disclosure, it is also possible for the functions described in the blocks to occur out of order. For example, the two blocks shown in succession may be executed substantially simultaneously or in reverse order depending on their functions.

In an embodiment of the disclosure, the term '~unit' may represent software or a hardware component, such as a field programmable gate array (FPGA) or application specific integrated circuit (ASIC), and the '~unit' may perform a specific role. The '~unit' is not limited to software or hardware. The '~unit' may be configured to be located in an addressable storage medium and may also be configured to reproduce one or more processors. In an embodiment of the disclosure, the '~unit' may include components such as software components, object-oriented software components, class components, and task components, as well as processes, functions, attributes, procedures, subroutines, segments of program code, drivers, firmware, microcode, circuitry, data, databases, data structures, tables, arrays, and variables. A function provided by a particular component or a particular '~unit' may be combined to reduce their number or separated into additional components. In addition, in an embodiment of the disclosure, the '~unit' may include one or more processors.

Hereinafter, the meanings of terms used in the disclosure are explained.

'Generative artificial intelligence (AI)' may refer to AI technology that may generate new text, images, or the like in response to prompts and input data (e.g., text, images, or the like). Representative examples of the generative AI are described in the section of 'generative model' below.

A 'generative model' may refer to a neural network model that implements generative AI technology. The generative model may generate a text or image based on the intent included in a prompt. In addition, the generative model may generate new data with similar characteristics with input data or new data corresponding to input data by learning the pattern and structure of training data. For example, when a prompt is a text including a question, the generative model may generate and output an answer to the question. Additionally, for example, when a prompt is a text including a request, the generative model may output text or an image generated according to the request. A transformer being executed in an electronic device according to an embodiment of the disclosure corresponds to the generative model. Terms such as 'generative AI model', 'language model', 'neural network mode', or 'model' may be used instead of 'generative model'.

A 'prompt' is a sentence or keyword for interaction between a user and a model, and may be text for the user to transmit a question or command to the model. In other words, a prompt may mean text or other forms of input that guide a model on what kind of output the model should generate. In the disclosure, when it is said that 'a prompt is executed' or 'a generative model is executed according to a prompt', it may mean an operation in which the generative model performs a task according to the request of the prompt, that is an operation in which the generative model generates a result corresponding to the prompt by performing a computation when the prompt is input to the generative model. A prompt may include 'intent' and 'details', which are described in more detail below. Terms such as 'instruction' may also be used instead of 'prompt'.

The 'intent' of a prompt may mean a purpose or goal that a user wants to achieve through the model, and may mean an intent inherent in the context of the prompt. Also, a remaining portion of the prompt, excluding the intent, may be called the 'details' of the prompt. That is, the details of the prompt may mean additional information or conditions that specify the intent of the prompt. For example, when a prompt is "draw a picture of a bird flying in the sky," then "draw a picture" or "draw a picture of a bird" may correspond to the intent, and "a bird flying in the sky" or "flying in the sky" may correspond to the details. Terms, such as 'goal', 'purpose', 'request', or 'inquiry', may also be used instead of 'intent'. In addition, terms, such as 'specifics' or 'conditions', may also be used instead of 'details'.

'Input data' may mean actual data that a model needs to process or analyze. The input data may be in various forms, such as text, images, audio, or the like. For example, when a user requests translation by inputting a prompt to the model such as "translate the following sentence into Korean," the text to be translated may be input data. For example, when the user requests the model to edit an image by inputting a prompt such as "erase the cloud in the sky," the image to be edited may be input data. Terms, such as 'source data' or 'input values', may also be used instead of 'input data'.

An 'input sequence' is an input actually applied to a model, and may mean an entire input that the model is required to process. In other words, an input sequence may mean entire data transferred to an input layer of a model, and may include text prompts and also other forms of input data, such as images and audio. That is, the input sequence may be a combination of a prompt and input data. For example, an input sequence for a text-to-image model may include image data to be edited and a prompt (text) that instructs the editing.

As one example, when a user inputs a sentence to be translated, "He always inspires me," as input data along with a prompt such as "translate the following sentence into Korean" to a model, an input sequence may be "translate the following sentence into Korean. He always inspires me." As an additional example, when the user inputs an image to be edited as input data along with a prompt such as "erase the cloud in the sky" to the model, the input sequence may be a combination of "erase the cloud in the sky in the photo" and the image. According to an embodiment, the image, which is the input data, may be converted into text, and the input sequence may be a combination of the text and the prompt. Terms, such as 'complete input', 'input stream', or 'input series' may also be used instead of 'input sequence'.

A 'token reasoner' may mean a configuration that analyzes input text and performs conversion on the text. In the disclosure, the token reasoner may allow a generative model to operate more efficiently by simplifying a prompt. The token reasoner may seek to understand intent and context of a prompt and simplify the prompt based on a result of understanding. For example, the token reasoner may restructure the structure of a prompt by removing or changing some of the tokens included in the prompt.

In the disclosure, an electronic device may make clear and concise prompts by using a token reasoner, as a result, a response of a model may become more accurate by removing unnecessary information from the prompt and emphasizing important information. A rule by which the token reasoner converts (simplifies) a prompt may be implemented in various ways, and various techniques may be used when converting the prompt. For example, in an embodiment of the disclosure, the token reasoner may simplify a prompt by using at least one of token pruning or vector quantization.

The token reasoner may be implemented to be included in the generative model, or may be implemented separately outside of the generative model. In addition, the token reasoner may be implemented as a rule-based system or may be implemented to include a neural network. Terms, such as 'prompt simplification module' or 'prompt compression module', may also be used instead of 'token reasoner'.

A 'token pruner' may mean a configuration that performs an operation of removing unnecessary tokens from a prompt or an input sequence to increase the efficiency of a model, that is, token pruning. The token pruner may evaluate the importance of each token and remove tokens with low importance. That is, the token pruner may leave key tokens or main tokens among tokens included in a prompt or input sequence and remove dummy tokens and auxiliary tokens. At this time, the importance of each token may be determined by an attention mechanism or other various evaluation criteria.

A 'task database' may mean a space where data related to tasks performed by using a model are stored. The task database may store information about a user who previously used the model. According to an embodiment of the disclosure, the task database may store information about prompts corresponding to previously performed tasks (e.g., an embedding matrix corresponding to a prompt, a code book generated for a vector corresponding to a prompt, a code book generated for a token sequence representing intent included in a prompt, or the like). In addition, the task database may store an intermediate computation result generated during a process of performing a previous task. For example, a hidden state matrix (e.g., an attention value matrix, activation matrix, or the like) output from each layer of the model may be stored. According to an embodiment of the disclosure, the task database may be a personalized database implemented in the cloud or on-device. That is, a task database may be provided to correspond to each user account. Terms, such as 'personal database', 'personal knowledge graph', or 'database', may also be used instead of 'task database'.

A 'hidden state matrix (HSM)' may mean an intermediate computation result output from each of layers (e.g., a self-attention layer, or the like) included in a model during a process in which the model executes a prompt. That is, the HSM may mean a result value of performing a computation on tokens included in an input sequence by using weights included in a hidden layer of the model. An HSM corresponding to each of various layers (e.g., an attention layer, an activation layer, or the like) included in the model may exist. Accordingly, an attention score matrix, an attention value matrix, an activation matrix, or the like may be included in the HSM. Terms, such as 'latent matrix', 'latent variable matrix', or 'intermediate matrix', may also be used instead of 'HSM'.

Hereinafter, embodiments of the disclosure are described in detail with reference to the drawings.

The disclosure relates to a method of improving processing efficiency of a generative model. Embodiments of the disclosure have characteristics of reducing an amount of computation performed by the generative model and also reducing an amount of data transferred between memories during processing by simplifying a prompt input to the generative model and utilizing intermediate computation results (e.g., HSM) obtained during a previous process of executing the same or similar prompt. Therefore, when using a method according to embodiments of the disclosure, the generative model may be executed even on an electronic device with a relatively low capabilities, thereby enabling on-device realization of the generative model.

The characteristics of the embodiments of the disclosure are briefly summarized as follows.
(A) simplifying prompts input to a generative model (token reasoning) may include:
   - leaving only key tokens among tokens included in a prompt and removing dummy tokens;
   - reducing the number of tokens by performing vector quantization on tokens indicating intent among tokens included in a prompt; and/or
   - reducing the number of tokens by performing vector quantization on a vector corresponding to an entire prompt.
(B) utilizing an intermediate computation result generated in a previous process of executing a prompt may include:
   - when a prompt that is substantially identical to an input prompt has been executed previously, performing zero computation (skipping the computation of the generative model);
   - when a prompt that is similar to an input prompt has been executed previously (a prompt with the same intent but different details), performing some computations (performing the computation of the generative model by using HSM); and/or
   - when a prompt that is identical or similar to an input prompt has not been executed previously, performing a complete computation (performing the computation of the generative model on an embedding matrix corresponding to the input prompt).

According to one or more embodiments of the disclosure, an amount of computation of a generative model may be primarily reduced by simplifying a prompt, and the amount of computation may be secondarily reduced by performing zero computation or some computations in the generative model.

Although a generative model is used in embodiments of the disclosure, a method according to embodiments may also be applied to various other neural network models.

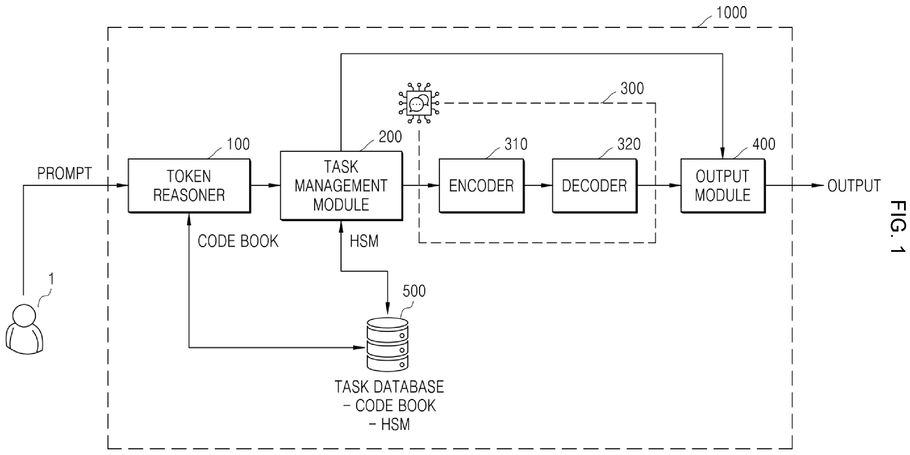

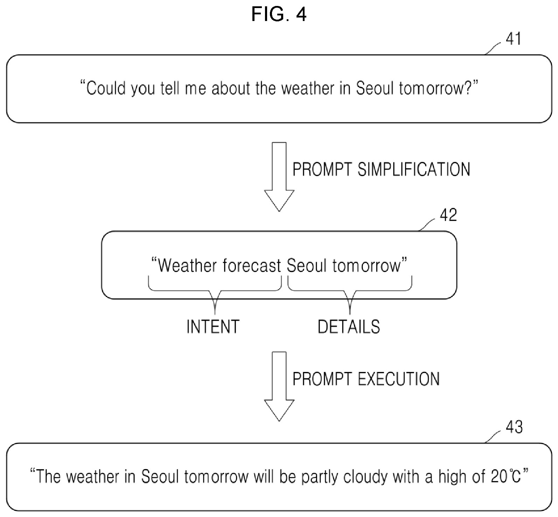

First, the configuration and operation of an electronic device according to an embodiment of the disclosure are described with reference to FIGS. 1 to 3, a method by which an electronic device according to an embodiment of the disclosure simplifies a prompt is described with reference to FIGS. 4 to 9, and a method by which an electronic device according to an embodiment of the disclosure executes a prompt by using an intermediate computation result stored in a previous process of performing a task is described with reference to FIGS. 1 to 20.

### 1. The overall configuration and operation of an electronic device

FIG. 1 is a diagram to describe modules included in an electronic device according to an embodiment of the disclosure. Referring to FIG. 1, an electronic device 1000 according to an embodiment of the disclosure may include a token reasoner 100, a task management module 200, a generative model 300, an output module 400, and a task database 500.

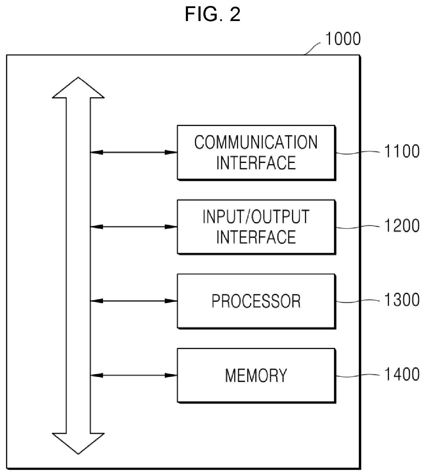

The modules (i.e., the token reasoner 100, the task management module 200, the generative model 300, the output module 400, and the task database 500) included in the electronic device 1000 of FIG. 1 are components classified based on functions or roles. The modules (i.e., the token reasoner 100, the task management module 200, the generative model 300, the output module 400, and the task database 500) of the electronic device 1000 of FIG. 1 may be a software configuration implemented by a processor 1300 of the electronic device 1000 to be described below with reference to FIG. 2 executing a program stored in the memory 1400. In other words, operations performed by the processor 1300 of the electronic device 1000 by executing a program or instruction stored in the memory 1400 are classified into a plurality of groups according to functions or purposes, and subjects performing the operations included in each classified group may be expressed as the modules (i.e., the token reasoner 100, the task management module 200, the generative model 300, the output module 400, and the task database 500) of FIG. 1. Accordingly, the operations described as being performed by the modules (i.e., the token reasoner 100, the task management module 200, the generative model 300, the output module 400, and the task database 500) of the electronic device 1000 shown in FIG. 1 may be seen as actually being performed by the processor 1300 of the electronic device 1000 by executing a program or instruction stored in the memory 1400.

FIG. 1 shows that one electronic device 1000 includes all modules (i.e., the token reasoner 100, the task management module 200, the generative model 300, the output module 400, and the task database 500), but is not limited thereto, and at least some of the modules (i.e., the token reasoner 100, the task management module 200, the generative model 300, the output module 400, and the task database 500) may be implemented to be included in a separate device, or any module may be implemented to be included in another module. In this way, the modules (i.e., the token reasoner 100, the task management module 200, the generative model 300, the output module 400, and the task database 500) included in the electronic device 1000 according to an embodiment of the disclosure may be a hardware configuration or a software configuration, or may be implemented in a form of various electronic devices (e.g., one electronic device or a combination of two or more electronic devices).

The electronic device 1000 according to an embodiment of the disclosure may be a user's terminal (e.g., a smartphone, a laptop, a desktop, or the like), but is not limited thereto, and may be a server that performs communication with the user's terminal.

The token reasoner 100 is configured to simplify a prompt received from a user 1. The token reasoner 100 may simplify a prompt by reducing the number of tokens included in the prompt. Because, when converting a prompt into an embedding matrix, the generative model 300 may understand the complex meaning and contextual information of the prompt as the embedding dimension (embedding size) increases, the embedding dimension is often set to a large value. When the embedding dimension has a large value, the amount of computation of the generative model 300 may significantly increase even when the number of tokens included in the prompt is slightly increased. Accordingly, the token reasoner 100 may primarily reduce the amount of computation of the generative model 300 by reducing the number of tokens included in the prompt.

According to an embodiment of the disclosure, the token reasoner 100 may simplify a prompt based on a history of using the electronic device 1000 by the user 1. In other words, the token reasoner 100 may simplify the prompt based on prompts previously executed by the electronic device 1000. When the user 1 frequently and repeatedly inputs the same or similar prompt, the token reasoner 100 may simplify a newly input prompt based on prompts previously input by the user 1. In addition, according to an embodiment of the disclosure, the token reasoner 100 may simplify a prompt by removing some tokens based on the importance of tokens included in the prompt or reducing the number of tokens while maintaining the same intent and context.

The token reasoner 100 may also utilize vector quantization in a process of simplifying a prompt. For example, the token reasoner 100 may convert an entire prompt into a vector or convert a set of tokens (a token sequence) indicating intent among tokens included in the prompt into a vector and perform vector quantization by using a code book stored in the task database 500.

When the generative model 300 supports a multimodal input, the token reasoner 100 may also simplify an input sequence obtained by combining a prompt (e.g., text requesting editing of an image) and input data (e.g., image data to be edited). For example, input data in the form of image or audio may be converted into text and then combined with a prompt to generate an input sequence in a text form, and the token reasoner 100 may simplify the generated input sequence. A method by which the token reasoner 100 simplifies an input sequence may be the same as a method of simplifying a prompt.

According to an embodiment of the disclosure, the token reasoner 100 may process a natural language processing process with a purpose of 'simplification of a prompt'. The token reasoner 100 may include a neural network, but may also operate based on other algorithms or rules without the neural network. According to embodiments of the disclosure, the token reasoner 100 may improve the processing efficiency of the generative model 300 by reducing the number of tokens in advance based on a usage history or the like before executing the generative model 300.

In the disclosure, it is expressed that the token reasoner 100 'simplifies' a prompt, but other expressions such as 'optimization' of a prompt or 'compression' of a prompt may also be used.

A detailed method by which the token reasoner 100 simplifies a prompt is described in detail below with reference to FIGS. 4 to 9.

The task management module 200 is configured to manage the performance of tasks using the generative model 300. The task management module 200 may obtain a simplified prompt from the token reasoner 100, check whether a prompt identical or similar to the simplified prompt has been executed previously, and control the computation performance of the generative model 300 based on a result of the checking. When a similar prompt has been executed previously, the task management module 200 may shorten the computation time of the generative model 300 by caching an intermediate computation result stored in the task database 500. For example, the task management module 200 may read an HSM corresponding to the similar prompt previously executed from flash memory and store the HSM in cache memory (e.g., cache memory of a central processing unit (CPU) or cache memory of a neural processing unit (NPU), and may allow the generative model 300 to use the HSM stored in the cache memory when performing a computation.

The task database 500 to be described below may store records of previously performed tasks. In addition, the task database 500 may store information related to tasks performed in the past (e.g., a prompt corresponding to a previous task, an intermediate computation result generated when performing a previous task, or the like), and the task management module 200 may determine whether an identical or similar prompt has been executed previously by searching the task database 500 based on the simplified prompt.

When a prompt that is identical to the simplified prompt received from the token reasoner 100 has been executed previously, the task management module 200 may obtain an Application Programming Interface (API) request corresponding to a previously executed prompt from the task database 500 and request execution while transmitting the API request to the output module 400. At this time, the task management module 200 may control the generative model 300 not to perform computation. (zero computation).

When a prompt that is similar to but not identical to the simplified prompt received from the token reasoner 100 has been executed previously, the task management module 200 may obtain an intermediate computation result (e.g., HSM) corresponding to the previously executed prompt from the task database 500 and control the generative model 300 to perform computation by using the obtained intermediate computation result. (partial computations).

When a prompt that is similar or identical to the simplified prompt received from the token reasoner 100 has not been executed previously, the task management module 200 may control the generative model 300 to perform computation by inputting an embedding matrix corresponding to the simplified prompt. (full computation).

In summary, the task management module 200 may control the generative model 300 to operate in any one method among zero computation, partial computation, and full computation based on whether a prompt that is identical or similar to a prompt input by the user 1 or a prompt simplified from the input prompt has been executed previously.

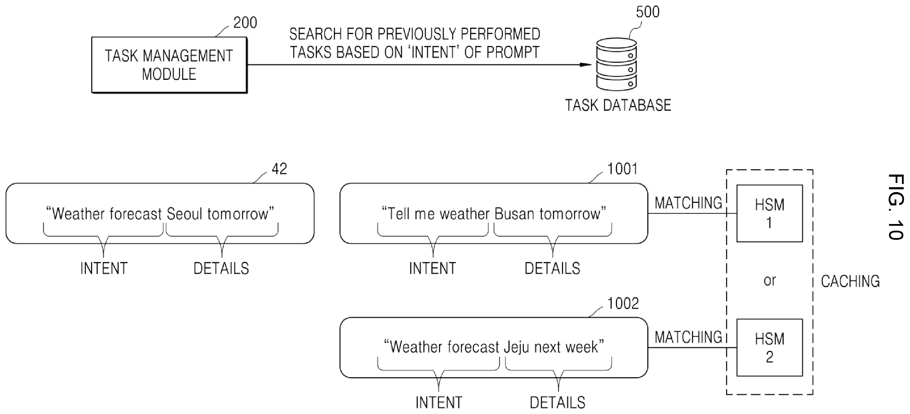

A detailed method by which the task management module 200 searches the task database 500 based on a simplified prompt and controls the generative model 300 to perform computation by using an intermediate computation result is described in detail below with reference to FIGS. 10 to 20.

The generative model 300 may be a generative AI model for generating text, images, or audio according to a prompt input by the user 1. According to an embodiment of the disclosure, the generative model 300 may be implemented in a form of a transformer and may include an encoder 310 and a decoder 320. Each of the encoder 310 and the decoder 320 of the generative model 300 may include a plurality of attention layers and feedforward layers.

In a process in which the generative model 300 performs computation according to a prompt, the layers included in the encoder 310 and the decoder 320 output matrices and transfer the matrices onto a next layer, and matrices generated in the middle of such a computation process are called HSM. For example, in the process in which the generative model 300 performs computation, the attention layers may output an attention value matrix, and the feedforward layers may output an activation matrix. Both the attention value matrix and the activation matrix are included in the HSM. The HSM output from the layers of the generative model 300 may be stored in the task database 500 as an intermediate computation result.

According to an embodiment of the disclosure, the generative model 300 may be an on-device model mounted on the electronic device 1000, which is a terminal of the user 1. For example, the generative model 300 may be executed by the processor 1300 of the electronic device 1000 to be described below by executing a program stored in the memory 1400.

The output module 400 may be configured to generate an output to be provided to the user 1 according to an output of the generative model 300 or the request of the task management module 200.

When the generative model 300 performs partial computation or full computation, the output module 400 may appropriately transform and output the output of the generative model 300 according to an input/output interface 1200 of the electronic device 1000. For example, when the output of the generative model 300 is in a form of text, the output module 400 may output the text on a screen in a predetermined font and size, or may convert the text into voice and output the voice through a speaker.

When the generative model 300 performs zero computation, the output module 400 may output a result of a previously performed task in the same manner by calling an API according to a request received from the task management module 200.

The task database 500 may be configured to store information related to a task performed by the generative model 300. According to an embodiment of the disclosure, the task database 500 may store records of previously performed tasks. According to an embodiment of the disclosure, the task database 500 may store information related to a previously performed task. For example, the task database 500 may store a code book generated by clustering vectors corresponding to previously executed prompts. For example, the task database 500 may store a code book generated by clustering vectors corresponding to a set of tokens (a token sequence) indicating intent among tokens included in previously executed prompts. The code books stored in the task database 500 may be used by the token reasoner 100 in a process of simplifying a prompt, or may be used by the task management module 200 in a process of searching for previously performed tasks.

According to an embodiment of the disclosure, the task database 500 may store HSMs output from the layers included in the generative model 300 during a computation process. When a prompt that is similar to a previously executed prompt is executed, the task management module 200 may cache HSMs stored in the task database 500 and allow the generative model 300 to use the HSMs during computation.

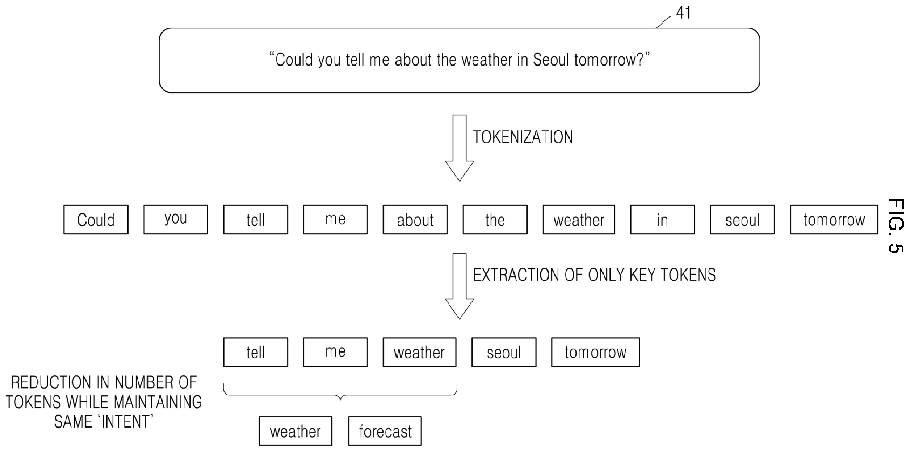

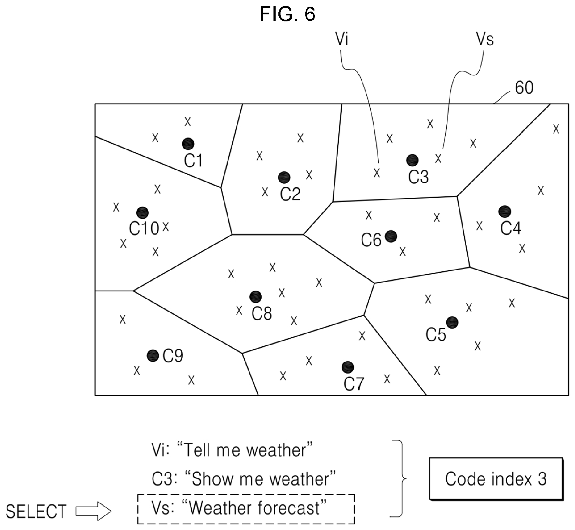

According to an embodiment of the disclosure, the task database 500 may also store a token sequence indicating intent of a prompt frequently used. At this time, a 'token sequence' may mean a set of one or more tokens or a unit in which one or more tokens are listed. The stored token sequence may be used during a process of simplifying a prompt. This is described in detail below with reference to FIGS. 5 and 6.

According to an embodiment of the disclosure, the task database 500 may be stored in flash memory, and the electronic device 1000 may store a portion of data stored in the task database 500 in cache memory during a process of performing a task to allow the data to be quickly used in computation.

According to an embodiment of the disclosure, the task database 500 may include one or more personal knowledge graphs, and relationships between the intent and details of previously executed prompts and intermediate computation results may be set through nodes of the knowledge graphs. Accordingly, through the knowledge graphs, whether any prompt has been executed previously and an intermediate computation result obtained when executing the prompt may be checked.

According to an embodiment of the disclosure, the task database 500 may also include databases having various other structures and forms.

Data stored in the task database 500 is further described below.

FIG. 2 is a diagram to describe a hardware configuration included in an electronic device according to an embodiment of the disclosure. Referring to FIG. 2, the electronic device 1000 according to an embodiment may include a communication interface 1100, an input/output interface 1200, the processor 1300, and the memory 1400. However, components of the electronic device 1000 are not limited to the examples described above, and the electronic device 1000 may include more components or fewer components than the components described above. Some or all of the communication interface 1100, the input/output interface 1200, the processor 1300, and the memory 1400 may be implemented in the form of a single chip.

The communication interface 1100 is configured to transmit and receive signals (control commands, data, or the like) to and from an external device via wire or wirelessly, and may be implemented to include a communication chipset that supports various communication protocols. The communication interface 1100 may receive a signal from the outside and output the signal to the processor 1300, or may transmit a signal output from the processor 1300 to the outside. The electronic device 1000 may communicate with external devices through the communication interface 1100.

The input/output interface 1200 may include an input interface (e.g., a touch screen, a keyboard, a microphone, or the like) for receiving commands or information from the user 1 and an output interface (e.g., a display panel, a speaker, or the like) for displaying an execution result of an operation according to a command of the user 1 or the status of the electronic device 1000. According to an embodiment of the disclosure, the electronic device 1000 may receive a prompt and input data from the user 1 through the input/output interface 1200, and may output an execution result of a task (e.g., an answer to a question included in the prompt, an image edited according to a request of the prompt) through the input/output interface 1200 when the task is completed.

The processor 1300 is configured to control a series of processes so that the electronic device 1000 operates according to embodiments to be described below, and may be configured by one or a plurality of processors. The one or plurality of processors included in the processor 1300 may be circuitries, such as a system-onchip (SoC), an integrated circuit (IC), or the like. The one or plurality of processors included in the processor 1300 may be general-purpose processors, such as a CPU, a micro processor unit (MPU), an application processor (AP), a digital signal processor (DSP), or the like, graphics-dedicated processors, such as a graphics processing unit (GPU) and a vision processing unit (VPU), AI-dedicated processors, such as an NPU, or communication-dedicated processors, such as a communication processor (CP). When the one or plurality of processors included in the processor 1300 are AI-dedicated processors, the AI-dedicated processors may be designed as a hardware structure specialized for processing a specific AI model.

The processor 1300 may record data to the memory 1400 or read data stored in the memory 1400, and in particular, the processor 1300 may process data according to a predefined operation rule or AI model by executing a program or at least one instruction stored in the memory 1400. Accordingly, the processor 1300 may perform operations described in the following embodiments. In the following embodiments, operations described as being performed by the electronic device 1000 or the modules (i.e., the token reasoner 100, the task management module 200, the generative model 300, the output module 400, and the task database 500) included in the electronic device 1000 may be viewed as being performed by the processor 1300 unless otherwise specified.

The memory 1400 stores various programs or data, and may be configured as a storage medium or a combination of storage media, such as read-only memory (ROM), random-access memory (RAM), a hard disk, compact disc (CD)-ROM, a digital versatile disc (DVD), or the like. The memory 1400 may also be configured to be included in the processor 1300 without separately existing. The memory 1400 may include volatile memory, non-volatile memory, or a combination of volatile memory and non-volatile memory. The memory 1400 may store a program or at least one instruction to perform operations according to embodiments to be described below. The memory 1400 may also provide the processor 1300 with stored data according to a request of the processor 1300.

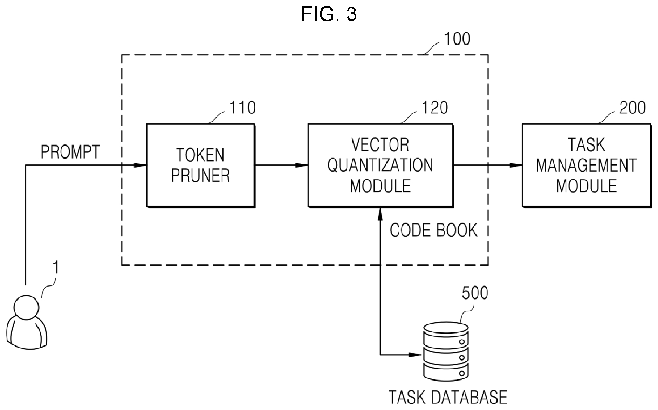

FIG. 3 is a diagram to describe detailed modules included in the token reasoner of FIG. 1. Referring to FIG. 3, the token reasoner 100 may include a token pruner 110 and a vector quantization module 120. According to an embodiment of the disclosure, the token reasoner 100 may also include only one of the token pruner 110 and the vector quantization module 120.

The token pruner 110 is configured to remove tokens with low importance from among tokens included in a prompt. The token pruner 110 may remove tokens that are less relevant to the overall context or tokens that are less relevant to the intent of the prompt from among tokens included in a prompt.

According to an embodiment of the disclosure, the token pruner 110 may evaluate the importance of each token based on the weight or activation output of each token by using an attention mechanism and remove tokens with low importance. According to an embodiment, the token pruner 110 may also determine the importance of tokens based on the frequency of usage by the user 1. For example, the token pruner 110 may determine that a token with high frequency of usage has a high level of importance. According to an embodiment, the token pruner 110 may also determine the importance of tokens in a rule-based manner.

The token pruner 110 may reduce the number of tokens by classifying tokens with importance higher than a certain standard as key tokens and removing remaining tokens (which may be referred to as 'dummy tokens').

The vector quantization module 120 is configured to reduce the number of tokens through vector quantization. According to an embodiment of the disclosure, the vector quantization module 120 may additionally reduce the number of tokens by receiving key tokens from the token pruner 110 and performing vector quantization on a set of tokens indicating intent among the key tokens.

The vector quantization module 120 may generate a code book through vector quantization, and the code book may be used to map specific data (e.g., vectors corresponding to a token sequence) to a plurality of data groups. For example, when input prompts are configured by different token sequences with the same intent, such as "turn on the TV," "can you turn on the television?," or "I am bored, can you turn on the television?," all input prompts may be replaced with the token sequence of "turn on the TV." Accordingly, the vector quantization module 120 may select a prompt such as "turn on the TV," which is configured by a token sequence including the fewest tokens, as a prompt to replace the above prompts.

The vector quantization module 120 may convert a token sequence including tokens indicating the intent of a prompt into a single vector by normalizing the token sequence in a time dimension and perform vector quantization by using the code book stored in the task database 500, thereby outputting a token sequence having the same intent but including a smaller number of tokens. In more details, the vector quantization module 120 may find, from the code book stored in the task database 500, a code index closest to the single vector converted from the token sequence based on a Euclidean distance, and may output a token sequence with the same intent but including a smaller number of tokens as a representative token sequence through the code index.

That is, when the token pruner 110 primarily reduces the number of tokens based on the importance of tokens, the vector quantization module 120 may secondarily reduce the number of tokens by performing vector quantization on tokens indicating the intent.

To this end, a code book in which a plurality of token sequences are clustered by intent may be stored in advance in the task database 500. That is, a code book in which token sequences indicating intent are clustered may be stored in advance in the task database 500. At this time, the clustered token sequences may be extracted from prompts previously executed by the electronic device 1000. In addition, when the electronic device 1000 executes a new prompt, the code book may be updated according to the newly executed prompt.

As described above, the token reasoner 100 may also be configured to include only one of the token pruner 110 and the vector quantization module 120. Accordingly, according to an embodiment of the disclosure, the vector quantization module 120 may also perform vector quantization on prompts that have not passed through the token pruner 110. For example, the vector quantization module 120 may convert a prompt input by the user 1 into a vector and perform vector quantization by using a code book stored in the task database 500, thereby outputting a prompt including a smaller number of tokens than the input prompt.

To this end, a code book in which vectors corresponding to prompts previously executed by the electronic device 1000 are clustered may be stored in advance in the task database 500. In addition, when the electronic device 1000 executes a new prompt, the code book may be updated according to the newly executed prompt.

A method by which the token pruner 110 removes some tokens based on importance and a method by which the vector quantization module 120 reduces the number of tokens of a prompt through vector quantization are described in detail below with reference to FIGS. 5 to 7.

According to an embodiment of the disclosure, the token reasoner 100 may not include the vector quantization module 120, and may also simplify a prompt by using various tree-based search algorithms. That is, the token reasoner 100 may express text corresponding to a prompt in a tree form and perform a search based on an obtained tree structure, thereby reducing the number of tokens included in a prompt.

For example, the token reasoner 100 may make the text more concise by omitting unimportant details or removing redundant expressions by using a parse tree representing a syntactic structure of the text and hierarchically expressing components (e.g., a noun, a verb, or the like) of a sentence.

For example, the token reasoner 100 may store a word or phrase that frequently appear in a text in a trie structure, and may find and remove or compress redundant expressions.

For example, the token reasoner 100 may generate a search tree by organizing multiple sentences with similar meanings into a tree structure, and may also select the most concise expression by using the search tree.

Hereinafter, a process in which the electronic device 1000 described above simplifies a prompt and performs computation of the generative model 300 by using an intermediate computation result stored in advance is described in detail.

### 2. Prompt simplification

The token reasoner 100 of the electronic device 1000 according to an embodiment of the disclosure may reduce a transmission amount of data between memories during a process of performing a task by reducing the number of tokens included in a prompt, and may also increase the efficiency of computation. The token reasoner 100 may allow the generative model 300 to generate an accurate and relevant output by converting a prompt input by the user 1 into a more concise and clear prompt.

FIG. 4 is a diagram to describe an overall flow of simplifying a prompt and executing the simplified prompt, according to an embodiment of the disclosure. When the user 1 inputs a prompt 41 of "Could you tell me about the weather in Seoul tomorrow?" to the electronic device 1000, the token reasoner 100 of the electronic device 1000 may output a simplified prompt 42 by removing and changing some tokens from the prompt. The simplified prompt 42 of FIG. 4 includes a token sequence ("weather forecast") indicating the intent and a token sequence ("Seoul tomorrow") indicating details.

The electronic device 1000 may execute the generative model 300 according to the simplified prompt 42 to provide an output 43 of "The weather in Seoul tomorrow will be partly cloudy with a high of 20 °C."

A process of converting the input prompt 41 into the simplified prompt 42 by using at least one of the token pruner 110 or the vector quantization module 120 is described in detail below with reference to FIGS. 5 to 7.

### (1) Removal of some tokens based on importance (token pruning).

As described above, the token pruner 110 may remove some tokens based on the importance of each of tokens included in a prompt. The token pruner 110 may remove tokens that have little effect on the intent or context of the prompt.

FIG. 5 is a diagram to describe a method of simplifying a prompt by extracting key tokens from among tokens included in a prompt and reducing the number of tokens indicating intent, according to an embodiment of the disclosure.

Referring to FIG. 5, the electronic device 1000 may extract a plurality of tokens by performing tokenization on an input prompt 41. As shown in FIG. 5, the prompt 41 may be divided into ten tokens.

The token pruner 110 may extract only key tokens from among the extracted ten tokens and remove remaining dummy tokens. As described above, the token pruner 110 may determine the importance of tokens based on a frequency of usage or by using an attention mechanism, and may classify tokens having importance higher than a certain level as key tokens. In FIG. 5, five tokens including "tell," "me," "weather," "Seoul" and "tomorrow" were classified as key tokens, and remaining tokens were removed by the token pruner 110.

As such, the token pruner 110 may leave only a core request portion by removing tokens with low importance from the prompt 41.

### (2) Reduction in number of tokens by using vector quantization

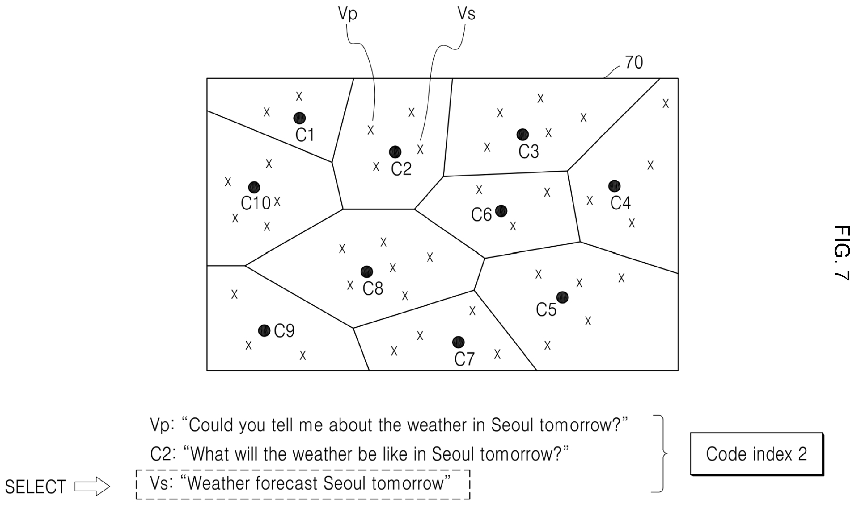

The vector quantization module 120 may perform vector quantization on tokens indicating intent included in a prompt, or may perform vector quantization on the entire prompt. First, a method of performing vector quantization on tokens indicating intent is described with reference to FIGS. 5 and 6, and then a method of performing vector quantization on an entire prompt is described with reference to FIG. 7.

### 1) Performing vector quantization on tokens indicating intent

Referring to FIG. 5, when the token pruner 110 extracts five key tokens from the ten tokens separated from the prompt 41, the vector quantization module 120 may then perform vector quantization to further reduce the number of tokens.

According to an embodiment of the disclosure, the vector quantization module 120 may identify the intent of a user, which is included in a prompt, and may simplify the prompt based on the intent. In FIG. 5, the vector quantization module 120 may perform vector quantization on a token sequence including "tell," "me," and "weather," which are tokens indicating intent among five key tokens. Because there may be long and short texts even the texts have the same intent, the vector quantization module 120 may convert the text into a token sequence ("weather forecast") including a smaller number of tokens while maintaining the same intent through vector quantization. A detailed method by which the vector quantization module 120 performs vector quantization on a token sequence indicating intent is described in detail with reference to FIG. 6.

FIG. 6 is a diagram to describe a method of simplifying a prompt by performing vector quantization on tokens indicating intent, according to an embodiment of the disclosure.

FIG. 6 shows a code book 60 for vector quantization. Referring to FIG. 6, the code book 60 includes ten clusters, and each cluster includes a centroid (e.g., C1 to C10).

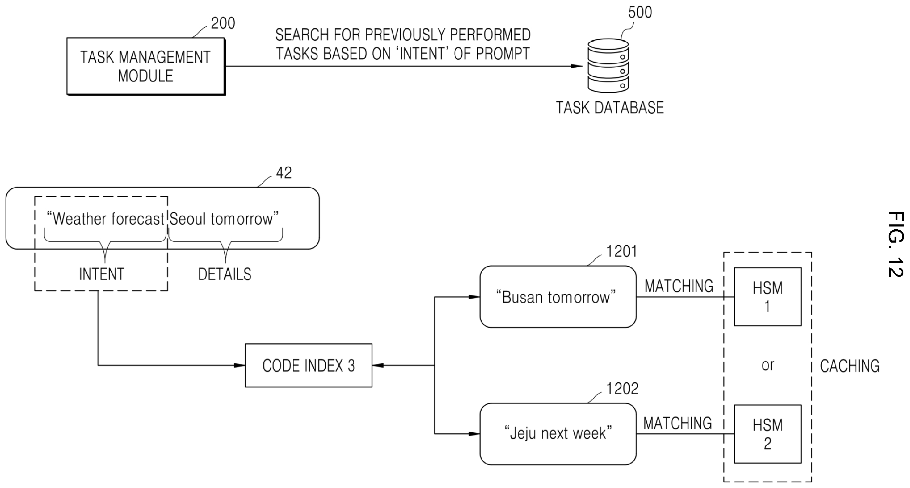

The vector quantization module 120 may convert a token sequence ("tell me weather") indicating intent into a vector Vi, identify a cluster to which the vector Vi belongs in the code book 60, and then assign a code index 3 corresponding to the identified cluster to the vector Vi. The assigned code index 3 may be used later by the task management module 200 in a process of finding an intermediate computation result (e.g., HSM). (refer to FIGS. 12 to 15)

According to an embodiment of the disclosure, unlike a general vector quantization technique, the vector quantization module 120 may map the vector Vi to a vector (hereinafter referred to as a 'minimum token vector') corresponding to a token sequence including the smallest number of tokens among vectors included in the same cluster instead of mapping the vector Vi to a code vector indicating a centroid C3. To this end, the code book 60 may include information about the mapping of the minimum token vector to a code index for each cluster.

Referring to FIG. 6, the vector Vi is included in a cluster corresponding to the centroid C3. A token sequence "show me weather" corresponding to the centroid C3 includes three tokens. The minimum token vector included in the cluster corresponding to the centroid C3 is vector Vs, and a token sequence "weather forecast" corresponding to the vector Vs includes two tokens.

The vector quantization module 120 may map the vector Vs to the vector Vi and replace the token sequence "tell me weather" with "weather forecast" to reduce the number of tokens. Accordingly, the prompt 41 input by the user 1 may be simplified into a prompt 42 having four tokens, such as "weather forecast Seoul tomorrow," by passing through the token pruner 110 and the vector quantization module 120.

The electronic device 1000 may perform clustering on token sequences included in previously executed prompts for vector quantization to generate the code book 60 and store the code book 60 in the task database 500.

### 2) Performing vector quantization on a vector corresponding to a prompt

According to an embodiment of the disclosure, the token reasoner 100 may be configured to include only the vector quantization module 120 without the token pruner 110. The vector quantization module 120 may perform vector quantization on a prompt input by the user 1 to simplify the prompt.

FIG. 7 is a diagram to describe a method of simplifying a prompt by performing vector quantization on a vector corresponding to an entire prompt, according to an embodiment of the disclosure.

FIG. 7 shows a code book 70 for vector quantization. The code book 60 of FIG. 6 used when performing vector quantization on a token sequence indicating intent and the code book 70 of FIG. 7 used when performing vector quantization on an entire prompt may be different from each other or may also be the same. Referring to FIG. 7, the code book 70 includes ten clusters, and each cluster includes a centroid (e.g., C1 to C10).

The vector quantization module 120 may convert the prompt 41 input by the user 1 into a vector Vp, identify a cluster to which the vector Vp belongs in the code book 70, and then assign a code index 2 corresponding to the identified cluster to the vector Vp. The assigned code index 2 may be used later by the task management module 200 in a process of finding an intermediate computation result (e.g., HSM).

As described above with reference to FIG. 6, according to an embodiment of the disclosure, the vector quantization module 120 may map the vector Vp to a minimum token vector instead of mapping the vector Vp to a code vector indicating a centroid C2. To this end, the code book 70 may include information about the mapping of the minimum token vector to a code index for each cluster.

Referring to FIG. 7, the vector Vp is included in a cluster corresponding to the centroid C2. A prompt "What will the weather be like in Seoul tomorrow?" corresponding to the centroid C2 includes nine tokens. The minimum token vector included in the cluster corresponding to the centroid C2 is the vector Vs, and a prompt "Weather forecast Seoul tomorrow" corresponding to the vector Vs includes four tokens.

The vector quantization module 120 may map the vector Vs to the vector Vp and replace the prompt "Could you tell me about the weather in Seoul tomorrow?" with "Weather forecast Seoul tomorrow" to reduce the number of tokens. Accordingly, the prompt 41 input by the user 1 may be simplified into the prompt 42 having four tokens, such as "Weather forecast Seoul tomorrow," by passing through the vector quantization module 120.

The electronic device 1000 may perform clustering on previously executed prompts for vector quantization to generate the code book 70 and store the code book 70 in the task database 500.

### (3) Reduction in number of tokens by using a language model

According to an embodiment of the disclosure, the token reasoner 100 may also simplify a prompt by using a language model.

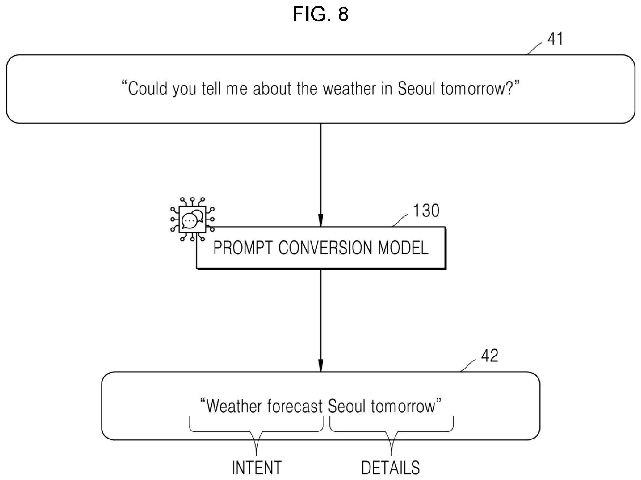

FIG. 8 is a diagram to describe a method of simplifying a prompt by using a language model, according to an embodiment of the disclosure. A prompt conversion model 130 may be a language model trained to convert an input text (prompt) into text including a smaller number of tokens while maintaining the core content, that is, the intent and context of the input text. Referring to FIG. 8, when the prompt 41 input by the user 1 is input to the prompt conversion model 130, the prompt conversion model 130 may output the simplified prompt 42.

According to an embodiment of the disclosure, the token reasoner 100 may also include the prompt conversion model 130 instead of the token pruner 110 and the vector quantization module 120.

### (4) Simplification of input sequence in case of a multimodal input

According to an embodiment of the disclosure, the generative model 300 may also support a multimodal input. For example, the generative model 300 may receive input data (e.g., images, audio, or the like) together with a prompt requesting processing (e.g., editing, summarizing, or the like) for the input data, and may process the input data according to the request of the prompt.

When the generative model 300 supports a multimodal input, the token reasoner 100 may convert input data into text and then merge the text with the prompt to generate an input sequence, thereby simplifying the input sequence. At this time, a method by which the token reasoner 100 simplifies the input sequence may be the same as the method by which the token reasoner 100 simplifies a prompt as described above.

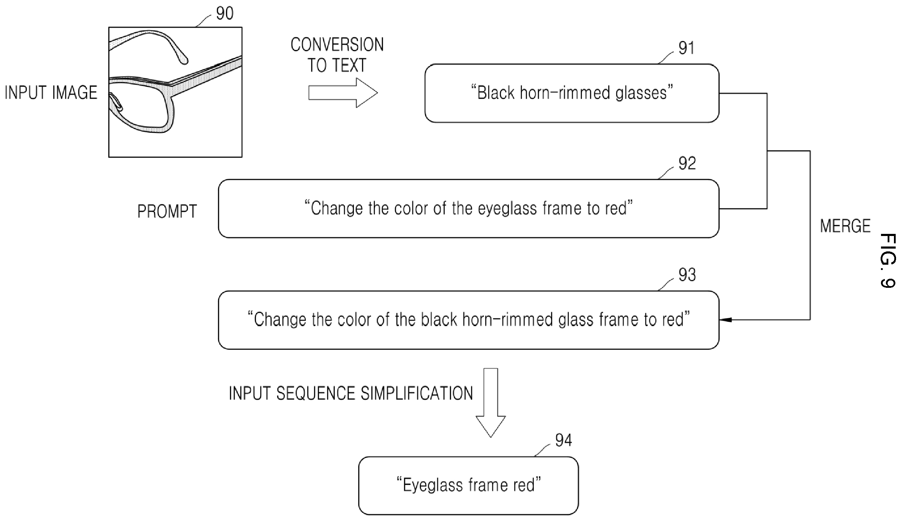

Referring to FIG. 9, when a user 1 inputs an input image 90 to the electronic device 1000 together with a prompt 92 of "Change the color of the eyeglass frame to red," the token reasoner 100 of the electronic device 1000 may obtain a text 91 of "Black horn-rimmed glasses" by converting the input image 90 into text.

The token reasoner 100 may obtain an input sequence 93 of "Change the color of the black horn-rimmed glass frame to red" by merging the text 91 converted from the input image 90 with the prompt 92. Then, the token reasoner 100 may simplify the input sequence 93 by performing at least one of token pruning or vector quantization on the input sequence 93. As shown in FIG. 9, the input sequence 93 may be simplified to "Eyeglass frame red."

The token reasoner 100 may simplify the input sequence 93 according to the method described above with reference to FIGS. 5 to 8, and a detailed description thereof is omitted.

The token reasoner 100 may transfer a simplified input sequence 94 to the task management module 200, and the task management module 200 may perform an operation according to the simplified input sequence 94.

As described above, the token reasoner 100 may analyze the input text and perform necessary conversion to allow the generative model 300 to operate more efficiently. That is, the token reasoner 100 may analyze the prompt to understand the intent and context of the prompt and perform necessary conversion. In this process, the token reasoner 100 may perform operations such as reconstructing the structure of text, removing unnecessary information, emphasizing important information, or the like. As a result, the prompt becomes more clear and concise, and thus the generative model 300 may be expected to operate efficiently. In addition, a response of the generative model 300 may be more accurate by removing unnecessary information from the prompt and emphasizing important information.

### 3. Execution of a generative model by using a previous intermediate computation result

When the token reasoner 100 transfers the simplified prompt 42 to the task management module 200, the task management module 200 may execute the generative model 300 according to the simplified prompt 42. When a prompt with the same or similar intent as the simplified prompt 42 has been executed previously, the task management module 200 may control the generative model 300 to perform computation by using an intermediate computation result (e.g., HSM) stored in the task database 500.

### (1) Determining a computation method based on tasks performed in the past

The task management module 200 may determine a computation method of the generative model 300 as any one of zero computation, partial computation, and full computation based on the tasks performed in the past. In detail, the task management module 200 may determine a computation method as zero computation when a prompt identical to the simplified prompt 42 has been executed before, determine a computation method as partial computation when a prompt with the same intent but different from the simplified prompt 42 has been executed before, and determine a computation method as full computation when no prompt identical or similar to the simplified prompt 42 has ever been executed.

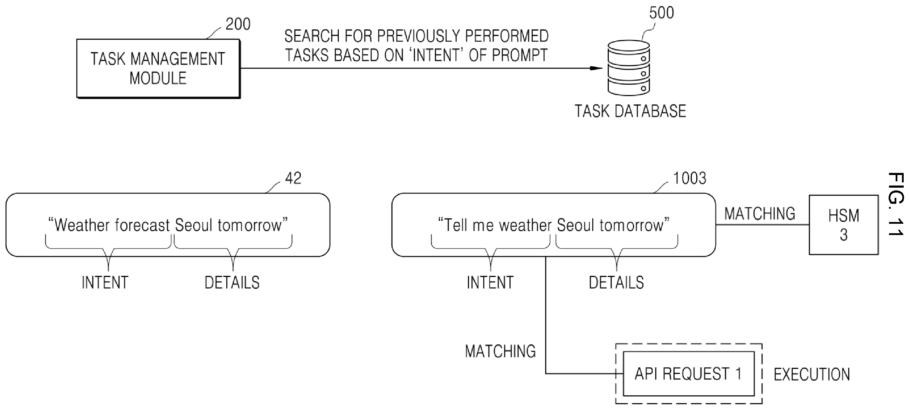

FIGS. 10 and 11 are diagrams to describe methods in which an electronic device according to an embodiment of the disclosure searches a task history based on the intent of a prompt and executes a generative model by using an intermediate computation result of a previously performed task.

When the task management module 200 receives the simplified prompt 42, the task management module 200 may search for stored records of previously performed tasks from the task database 500 based on the intent included in the simplified prompt 42.

Referring to FIG. 10, the task database 500 stores a first prompt 1001 and a second prompt 1002. According to an embodiment of the disclosure, the task database 500 may store embedding matrices corresponding to the first and second prompts 1001 and 1002. The task management module 200 may compare an embedding matrix corresponding to the simplified prompt 42 with the embedding matrices stored in the task database 500.

Both the first prompt 1001 and the second prompt 1002 have the intent of requesting weather information, which is the same as the intent included in the simplified prompt 42 received from the token reasoner 100. However, details ("Busan tomorrow") of the first prompt 1001 and details ("Jeju next week") of the second prompt 1002 are both different from details ("Seoul tomorrow") of the simplified prompt 42.

As a result of searching the task database 500 based on an intent of the simplified prompt 42, when the first and second prompts 1001 and 1002, which have been previously executed, have the same intent as the simplified prompt 42 but different details, the task management module 200 may control the generative model 300 to perform partial computation by using an intermediate computation result (HSM1 or HSM2) stored in the task database 500. That is, the task management module 200 may cache any one of HSM1 or HSM2, which is an intermediate computation result matched to the first or second prompts 1001 or 1002 to allow the generative model 300 to use the HSM1 or HSM2 during computation.

HSM1 and HSM2 may include an attention value matrix and an activation matrix obtained from each layer of the generative model 300 when executing the first prompt 1001 and the second prompt 1002, respectively.

Referring to FIG. 11, the task database 500 stores a third prompt 1003. The task database 500 may store an embedding matrix corresponding to the third prompt 1003. The task management module 200 may compare an embedding matrix corresponding to the simplified prompt 42 with the embedding matrices stored in the task database 500.

The third prompt 1003 has an intent of requesting weather information, which is the same as the intent included in the simplified prompt 42 received from the token reasoner 100. In addition, details ("Seoul tomorrow") of the third prompt 1003 are the same as details ("Seoul tomorrow") of the simplified prompt 42.

As a result of searching the task database 500 based on an intent of the simplified prompt 42, when the third prompt 1003 having the same intent and details as the intent and details of the simplified prompt 42 has been executed previously, the task management module 200 may control the generative model 300 not to perform computation (zero computation) and to execute an API request 1 matched to the third prompt 1003. Because the third prompt 1003, which has been previously executed, have the same intent and details as the intent and details of the simplified prompt 42, a task may be completed by directly executing the API request 1 without having to perform computation of the generative model 300 by using an HSM 3 matched to the third prompt 1003.

### (2) A detailed method of determining a computation method (search based on a code index)

According to an embodiment of the disclosure, a code index corresponding to the intent of prompts that were previously executed and information about details linked to the code index may also be stored in the task database 500. Hereinafter, a method of in which the task management module 200 finds a code index corresponding to intent of a prompt and determines a computation method of the generative model 300 based on information about details linked to the code index is described with reference to FIGS. 12 to 15.

Referring to FIG. 12, the task management module 200 may identify the code index 3 corresponding to the intent of the simplified prompt 42 and identify details 1201 and 1202 linked to the identified code index 3.

According to an embodiment of the disclosure, the task management module 200 may use information about the code index 3 identified by the token reasoner 100. As described above with reference to FIGS. 5 and 6, the token reasoner 100 may identify the code index 3 corresponding to the prompt 41 in a process of simplifying the prompt 41, and the identified code index 3 also corresponds to the intent of the simplified prompt 42.

According to an embodiment of the disclosure, the task management module 200 may also directly find the code index 3 corresponding to the token sequence ("weather forecast") indicating the intent of the simplified prompt 42 by using the code book 60 shown in FIG. 6.

The task database 500 may store information about the details 1201 and 1202 linked to the code index 3, and may store intermediate computation results HSM 1 and HSM 2 respectively matched to the details 1201 and 1202.

Because the code index 3 corresponds to the intent of requesting weather information, HSM 1 corresponds to an intermediate computation result output from layers of the generative model 300 when executing a prompt requesting information about tomorrow's weather in Busan. Similarly, HSM 2 corresponds to an intermediate computation result output from the layers of the generative model 300 when executing a prompt requesting information about the weather in Jeju next week.

The task management module 200 may determine a computation method of the generative model 300 based on a result of comparing the details ("Seoul tomorrow") included in the simplified prompt 42 with the details 1201 and 1202 linked to the code index 3. In FIG. 12, because none of the details 1201 and 1202 linked to the code index 3 match the details of the simplified prompt 42, the task management module 200 may determine a computation method as partial computation and cache any one of HSM 1 and HSM 2 to allow the generative model 300 to use the cached HSM 1 or HSM 2 during computation.

When the code index corresponding to the intent of the simplified prompt 42 does not exist in the task database 500, the task management module 200 may control the generative model 300 to perform full computation by using the simplified prompt 42.

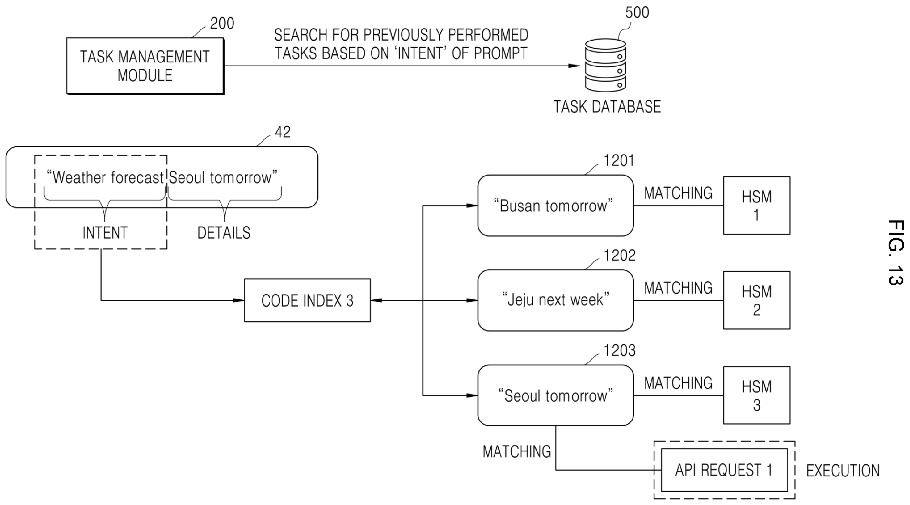

Referring to FIG. 13, the task management module 200 may identify the code index 3 corresponding to the intent of the simplified prompt 42 and identify details 1201, 1202, and 1203 linked to the identified code index 3. A method by which the task management module 200 finds the code index 3 corresponding to the intent of the simplified prompt 42 is described as above with reference to FIG. 12.

The task database 500 may store information about the details 1201, 1202, and 1203 linked to the code index 3, and may store intermediate computation results HSM 1, HSM 2, and HSM 3 respectively matched to the details 1201, 1202, and 1203. In addition, the task database 500 may also store an API request matched to each of the details 1201, 1202, and 1203.

The task management module 200 may determine a computation method of the generative model 300 based on a result of comparing the details ("Seoul tomorrow") included in the simplified prompt 42 with the details 1201, 1202, and 1203 linked to the code index 3. In FIG. 13, because one (that is, the details 1203) of the details 1201, 1202, and 1203 linked to the code index 3 matches the details of the simplified prompt 42, the task management module 200 may determine a computation method as zero computation to skip the computation of the generative model 300 and execute an API request 1 linked to the details 1203.

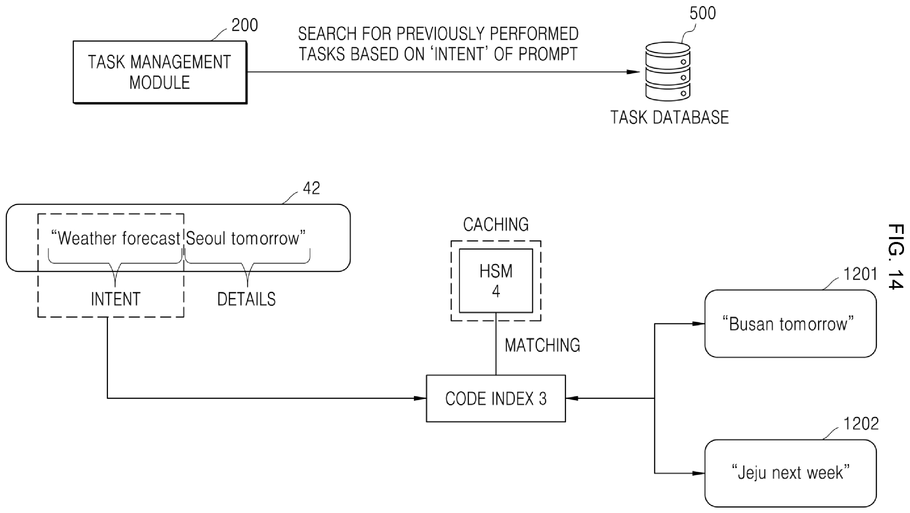

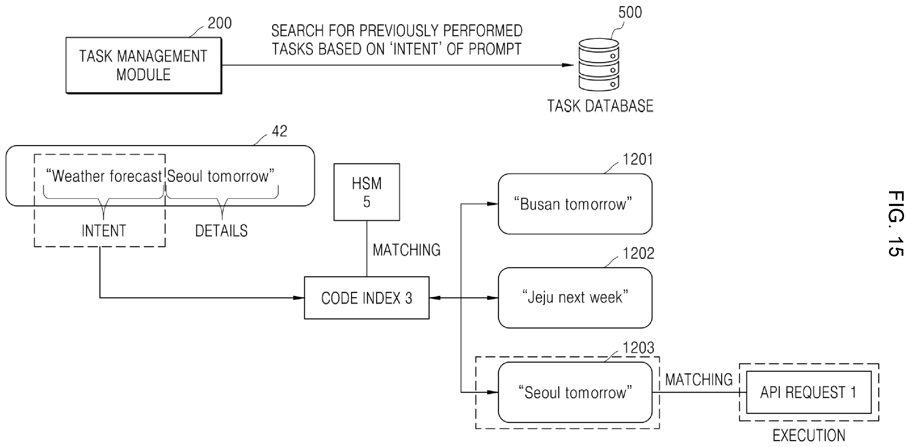

According to an embodiment of the disclosure, an intermediate computation result may also be stored by being matched to a code index corresponding to intent. Related embodiments are shown in FIGS. 14 and 15.

Referring to FIG. 14, the task management module 200 may identify the code index 3 corresponding to the intent of the simplified prompt 42 and identify the details 1201 and 1202 linked to the identified code index 3. A method by which the task management module 200 finds the code index 3 corresponding to the intent of the simplified prompt 42 is described as above with reference to FIG. 12.

The task database 500 may store information about the details 1201 and 1202 linked to the code index, and may store an intermediate computation result HSM 4 matched to the code index 3.

Because the code index 3 corresponds to the intent of requesting weather information, HSM 4 corresponds to an intermediate computation result output from the layers of the generative model 300 when executing a prompt requesting weather information. For example, an attention value matrix generated when executing a prompt requesting tomorrow weather information of Busan is executed and an attention value matrix generated when executing a prompt requesting weather information of Jeju next week may both be included in HSM 4.

The task management module 200 may determine a computation method of the generative model 300 based on a result of comparing the details ("Seoul tomorrow") included in the simplified prompt 42 with the details 1201 and 1202 linked to the code index 3. In FIG. 14, because none of the details 1201 and 1202 linked to the code index 3 match the details of the simplified prompt 42, the task management module 200 may determine a computation method as partial computation and cache the HSM 4 to allow the generative model 300 to use the cached HSM 4 during computation.

Referring to FIG. 15, the task management module 200 may identify the code index 3 corresponding to the intent of the simplified prompt 42 and identify the details 1201, 1202, and 1203 linked to the identified code index 3. A method by which the task management module 200 finds the code index 3 corresponding to the intent of the simplified prompt 42 is described as above with reference to FIG. 12.

The task database 500 may store information about the details 1201, 1202, and 1203 linked to the code index 3, and may store an intermediate computation result HSM 5 matched to the code index 3. In addition, the task database 500 may also store an API request matched to each of the details 1201, 1202, and 1203.

The task management module 200 may determine a computation method of the generative model 300 based on a result of comparing the details ("Seoul tomorrow") included in the simplified prompt 42 with the details 1201, 1202, and 1203 linked to the code index 3. In FIG. 15, because one (that is, the details 1203) of the details 1201, 1202, and 1203 linked to the code index 3 matches the details of the simplified prompt 42, the task management module 200 may determine a computation method as zero computation to skip the computation of the generative model 300 and execute an API request 1 linked to the details 1203.

According to an embodiment of the disclosure, the task management module 200 may find a code index corresponding to the simplified prompt 42 and also execute an API request matched to the code index. To this end, information about the code index corresponding to previously executed prompts may also be stored in the task database 500.

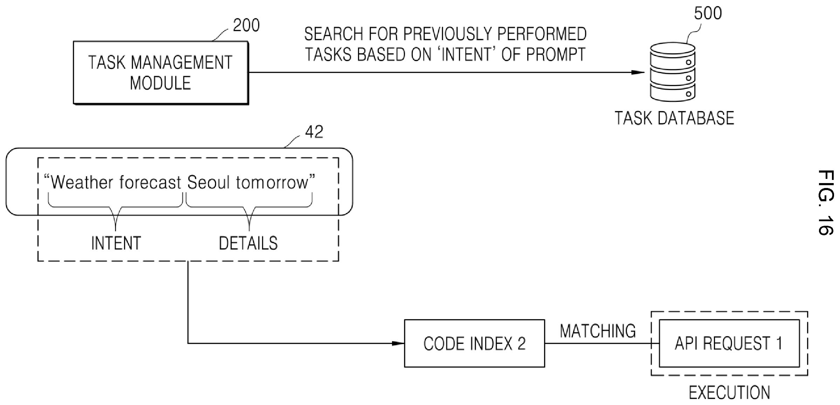

Referring to FIG. 16, the task management module 200 may identify a code index 2 corresponding to the simplified prompt 42 and execute an API request 1 matched to the identified code index 2.

When the code index 2 corresponding to the simplified prompt 42 does not exist in the task database 500, the task management module 200 may control the generative model 300 to perform full computation by using the simplified prompt 42.

According to an embodiment, when the code index 2 corresponding to the simplified prompt 42 does not exist in the task database 500, the task management module 200 may also find a code index corresponding to the intent of the simplified prompt 42.

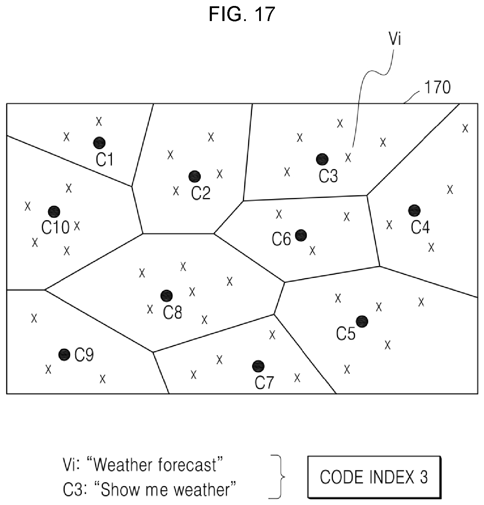

For example, the task management module 200 may convert a token sequence ("weather forecast") indicating the intent of the simplified prompt 42 into a vector Vi and find a cluster to which the vector Vi belongs in a code book 170 shown in FIG. 17 to assign the code index 3 to the vector Vi.

The task management module 200 may determine a computation method of the generative model 300 according to the method described above with reference to FIGS. 12 to 15 after identifying the code index 3 corresponding to the intent of the simplified prompt 42.

(3) A generative model performs computation according to a determined computation method.

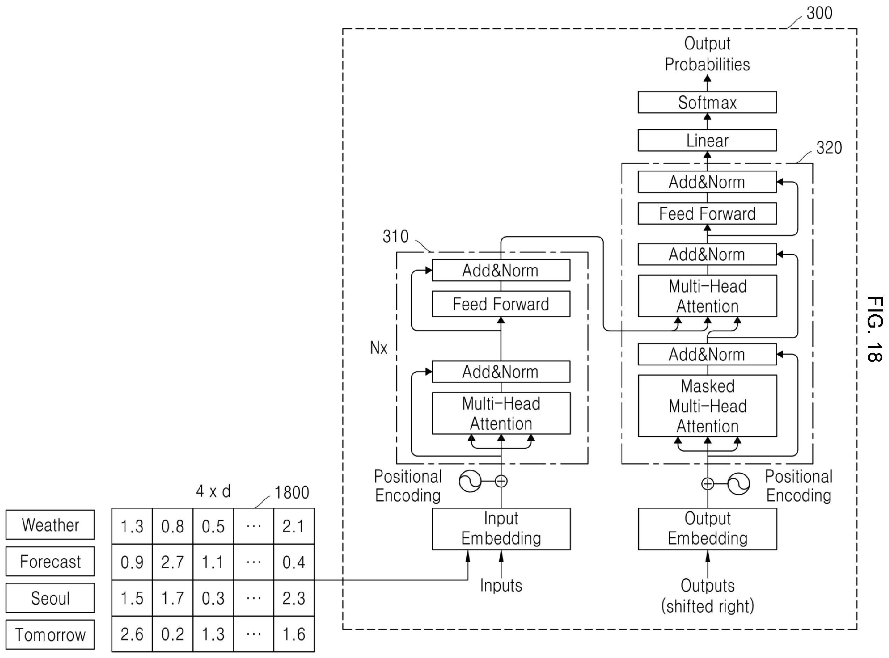

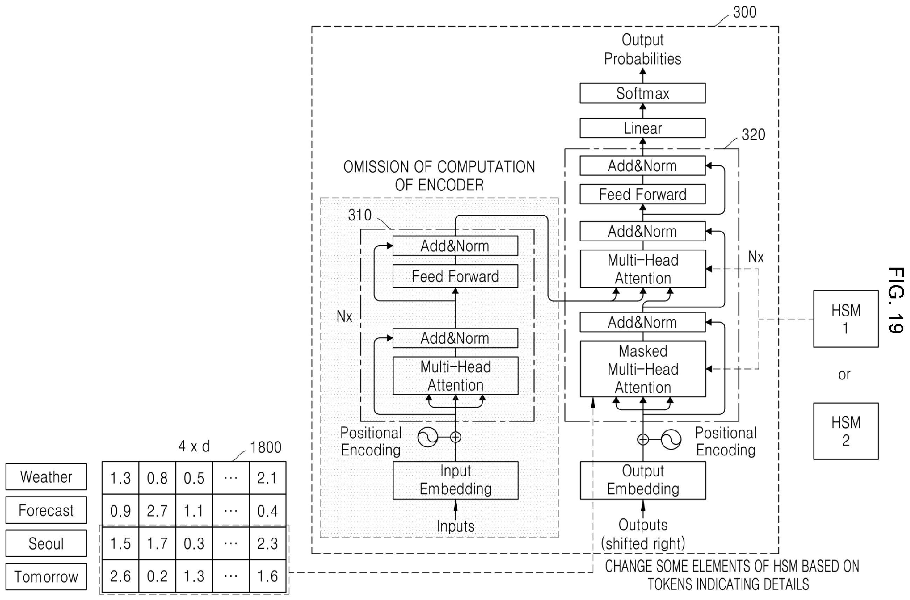

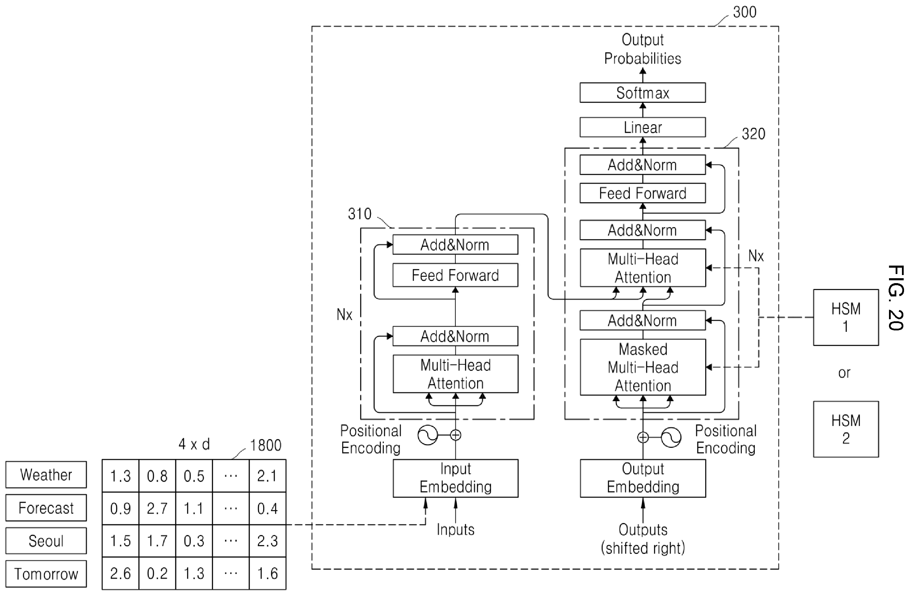

Hereinafter, a process in which the generative model 300 performs computation according to a determined computation method is described with reference to FIGS.18 to 20. An embedding matrix 1800 shown in FIGS. 18 to 20 is a matrix obtained by performing an embedding conversion on the simplified prompt 42 of FIG. 4. In addition, in FIGS. 19 and 20, the HSM 1 or HSM 2 used in a computation process of the decoder 320 corresponds to an intermediate computation result corresponding to the intent of the simplified prompt 42 as described above with reference to FIG. 10 or 12.

### 1) Full computation

FIG. 18 shows a situation in which the generative model 300 performs full computation. Referring to FIG. 18, the task management module 200 may input the embedding matrix 1800 corresponding to the simplified prompt 42 to the encoder 310 of the generative model 300. At this time, d corresponds to an embedding dimension (embedding size).

The layers (e.g., a multi-head attention layer, a feedforward layer, or the like) included in the generative model 300 may sequentially perform computation on the input embedding matrix 1800. Although the prompt 41 input to the electronic device 1000 by the user 1 includes ten tokens, the simplified prompt 42 by the token reasoner 100 includes four tokens, and thus the size of the embedding matrix 1800 may be reduced, and an effect of reducing an amount of computation of the generative model 300 may be expected. In addition, an effect of reducing an amount of data transferred between memories during computation may also be expected. In particular, as the embedding dimension increases, the complex meaning and context of a text may be understood, and thus a d value is often set large, and an effect of reducing an amount of computation due to reduction in number of tokens may be clearer as the d value increases.

According to the embodiment of the disclosure as described above, an effect of reducing an amount of computation and amount of transferred data may be expected even when the generative model 300 performs full computation because a similar prompt has not been executed previously.

### 2) Partial computation (performing computation by utilizing a previous intermediate computation result)

FIGS. 19 and 20 show a situation in which the generative model 300 performs partial computation.

### 2-1) Skipping computation of an encoder and using a pre-stored HSM during computation of a decoder

Referring to FIG. 19, the task management module 200 may skip computation of the encoder 310, and may control the decoder 320 to perform computation by using an intermediate computation result (HSM 1 or HSM 2) stored in the task database 500. As described above with reference to FIG. 10 or 12, HSM 1 or HSM 2 may be an intermediate computation result stored during a process of executing a prompt having the same intent as the simplified prompt 42.

The reason of skipping computation of the encoder 310 is as follows.

In the generative model 300 in a transformer form, the encoder 310 determines an intent of a user, which is included in a prompt, by analyzing the context and meaning of the prompt, and the decoder 320 performs computation for generating an output according to the determined intent of the user. That is, in the generative model 300, the encoder 310 serves to identify an intent included in a prompt and transfer the identified intent to the decoder 320.

In an embodiment of the disclosure, because the token reasoner 100 has already identified an intent included in a prompt while performing vector quantization in a process of simplifying the prompt, and the decoder 320 performs computation by using an intermediate computation result (HSM 1 or HSM 2) corresponding to the identified intent, and thus the intent of the prompt may be sufficiently reflected in the output of the generative model 300.

In particular, in case of an HSM, such as an attention value matrix or the like, when the intent of a previously executed prompt is the same as an intent of a newly input prompt, a desired result may be obtained by using an HSM generated in a process of executing the previous prompt in a process of executing the newly input prompt even when there are some differences in details.

For example, when an HSM generated in a process of previously executing a prompt of "draw a puppy" is stored, and a prompt of "draw a cat" is newly input, the intents of both prompts are the same as "draw", and thus the previously stored HSM may be used in a process of executing the newly input prompt.

Accordingly, the task management module 200 may control to skip computation of the encoder 310 and allow the intent of the prompt to be reflected in the computation of the decoder 320 through an intermediate computation result (HSM 1 or HSM 2).

According to an embodiment of the disclosure, the task management module 200 may control to skip computation of some layers among the plurality of layers included in the decoder 320. The decoder 320 may perform computation of a next layer by using a matrix included in the HSM 1 or HSM 2 as an output of a layer where computation is skipped.

For example, the generative model 300 may skip computation of a particular multi-head attention layer included in the decoder 320 and retrieve an attention value matrix corresponding to the particular layer from cache memory to use the retrieved attention value matrix as an input for a next layer. To this end, the task management module 200 may retrieve HSM 1 or HSM 2 from the task database 500 stored in flash memory and store the cached HSM 1 or HSM 2 in the cache memory. As such, when the computation of the decoder 320 is performed by caching the attention value matrix, time for the computation of the decoder 320 may be effectively shortened because a process of generating the attention value matrix, which requires a long time, may be skipped.

According to an embodiment, the generative model 300 may also ignore tokens with low influence and perform computation by referencing an activation matrix retrieved from the cache memory.

When the generative model 300 performs partial computation, the simplified prompt 42 has differences in details ("Seoul", "tomorrow") compared to previously executed prompts, and thus the differences need to be reflected in computation. Accordingly, the generative model 300 may perform the computation of decoder 320 by reflecting a portion corresponding to the details ("Seoul", "tomorrow") in the embedding matrix 1800.

According to an embodiment of the disclosure, the generative model 300 may change some elements of the HSM used in the computation of the decoder 320 based on the embedding matrix 1800. For example, when HSM 1 is an attention value matrix generated in a process of executing a prompt of "Tell me weather Busan tomorrow" as shown in FIG. 10, the generative model 300 may change a value of an element included in a portion (a row corresponding to "Busan" and a row corresponding to "tomorrow") corresponding to a token indicating the details in the attention value matrix. At this time, the generative model 300 may change a value of an element of an HSM based on a value of an element included in a portion (a row corresponding to "Seoul" and a row corresponding to "tomorrow") corresponding to token indicating details in the embedding matrix 1800.

According to an embodiment of the disclosure, the generative model 300 may infer and change a new value of an element of an HSM based on history data of previously executed prompts. When the generative model 300 has history data including HSMs generated when executing previous prompts including various intents and details, the generative model 300 may infer how some element values of the HSM will change according to a change in some element values of the embedding matrix 1800 by using the history data.

According to an embodiment of the disclosure, the task management module 200 may also control to skip only the computation of some layers among the layers included in the encoder 310 without skipping the entire computation of the encoder 310. Even when the computation of some layers of the encoder 310 is skipped, an HSM corresponding to an intent of a prompt may be cached and used as an output of a layer where computation is skipped, similar to a case where computation is skipped in the decoder 320.

According to an embodiment of the disclosure, the task management module 200 may also control to skip only computation in a particular type of layer (e.g., a multi-head attention layer) among the layers included in the encoder 310 or the decoder 320 and to cache and use an HSM.

### 2-2) Performing computation of an encoder and using a pre-stored HSM during computation of a decoder

Referring to FIG. 20, the task management module 200 may also control the encoder 310 to perform computation on the embedding matrix 1800 and control the decoder 320 to perform computation by using an intermediate computation result (HSM 1 or HSM 2) stored in the task database 500. As described above with reference to FIG. 10 or 12, HSM 1 or HSM 2 may be an intermediate computation result stored during a process of executing a prompt having the same intent as the simplified prompt 42.

An output of the encoder 310 using the embedding matrix 1800 as an input may be a high-dimensional vector including contextual information for each token included in a prompt, and the output of the encoder 310 may be reflected in the computation of some layers of the decoder 320.

Accordingly, according to an embodiment of the disclosure, the generative model 300 may perform all computations of the encoder 310 on the embedding matrix 1800 and reduce an amount of computation by using a pre-stored HSM in the computation of the decoder 320. The generative model 300 may reduce an amount of computation by using a pre-stored HSM for some layers in a process of performing the computation of the encoder 310 on the embedding matrix 1800.

For example, the generative model 300 performs the computation in most layers according to a full computation method described above with reference to FIG. 18, but the computation may be skipped for some layers of the encoder 310 or the decoder 320, and the HSM 1 or HSM 2 stored in cache memory may be used as an output of the layer where computation was skipped.

According to an embodiment of the disclosure, in performing the computation of the encoder 310 or the decoder 320 by using an HSM corresponding to a previously executed prompt, as described above with reference to FIG. 19, computation may also be performed by reflecting a portion corresponding to the details ("Seoul", "tomorrow") in the embedding matrix 1800.

### 3) Zero computation

When a prompt having the same intent and details as the simplified prompt 42 has been executed previously (refer to FIGS. 11 and 13), the task management module 200 may control to skip the computation of the generative model 300 and to execute a pre-stored API request.

### 4. A description on a process referring to flowcharts

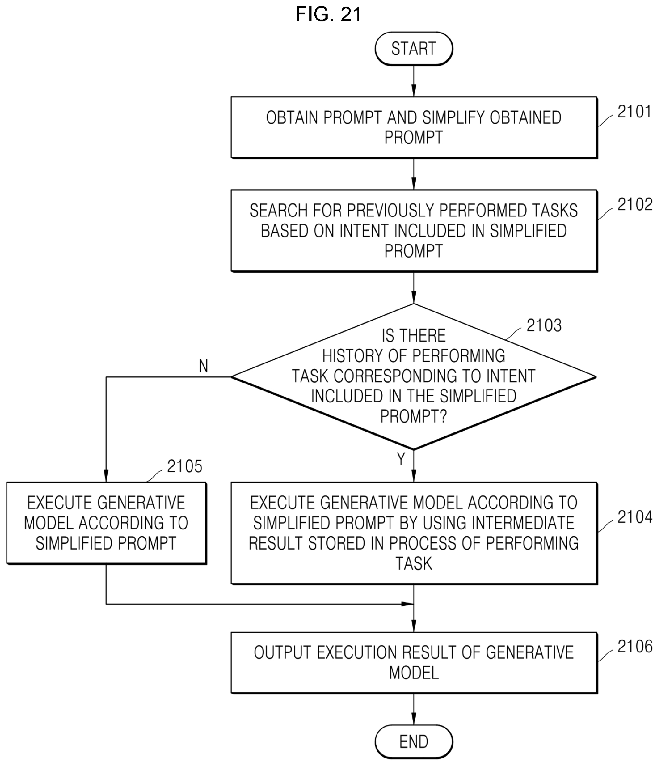

Hereinafter, a method of improving processing efficiency of a generative model according to embodiments of the disclosure is described with reference to the flowcharts of FIGS. 21 to 28. Operations included in the flowcharts of FIGS. 21 to 28 are performed by the electronic device 1000 of FIGS. 1 and 2, and thus descriptions already given above with reference to FIGS. 1 to 20 may be equally applied to FIGS. 21 to 28 even when omitted below.

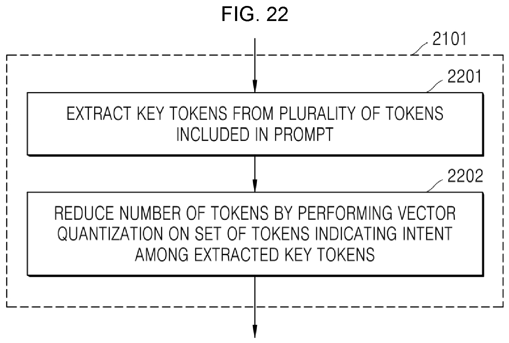

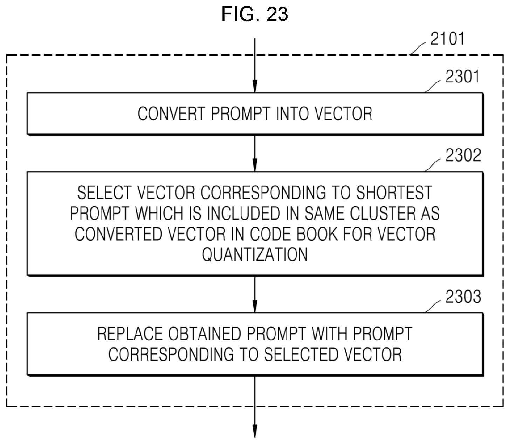

Referring to FIG. 21, in operation 2101, the electronic device 1000 may obtain a prompt form a user and simplify the obtained prompt. The simplified prompt may also include an intent and details. The electronic device 1000 may primarily reduce the number of tokens by performing token pruning on the prompt and then may secondarily reduce the number of tokens by performing vector quantization on a token sequence indicating intent. According to an embodiment, the electronic device 1000 may also reduce the number of tokens by performing vector quantization on a vector corresponding to the entire prompt. Each method is described with reference FIGS. 22 and 23.

FIG. 22 is a flowchart to describe detailed operations included in operation 2101 of FIG. 21.

In operation 2201, the electronic device 1000 may extract key tokens from among a plurality of tokens included in the prompt. The electronic device 1000 may evaluate the importance of each token by using an attention mechanism or based on a frequency with which a token is included in previously executed prompts, and may classify tokens having importance higher than a certain standard as key tokens.

In operation 2202, the electronic device 1000 may reduce the number of tokens by performing vector quantization on a set of tokens indicating intent among the extracted key tokens. For example, the electronic device 1000 may convert a token sequence including tokens indicating the intent of the prompt into a vector and perform vector quantization by using a pre-stored code book, thereby outputting a token sequence with the same intent but having a smaller number of tokens. To this end, a code book in which a plurality of token sequences are clustered by each intent may be stored in advance.

A detailed method by which the electronic device 1000 performs vector quantization is as described above with reference to FIG. 6.

FIG. 23 is a flowchart to describe detailed operations included in operation 2101 of FIG. 21.

In operation 2301, the electronic device 1000 may convert the prompt into a vector. At this time, the electronic device 1000 may convert the prompt into a vector corresponding to the entire prompt instead of converting the prompt into a vector for each token.

In operation 2302, the electronic device 1000 may select, from the code book for vector quantization, the vector (minimum token vector) corresponding to the shortest prompt, which is included in the same cluster as the converted vector.

In detail, the electronic device 1000 may identify a cluster to which the converted vector belongs in the code book, assign a code index corresponding to the cluster to the converted vector, and map the minimum token vector included in the same cluster to the converted vector. A method by which the electronic device 1000 maps a minimum token vector to a vector corresponding to a prompt by performing vector quantization is as described above with reference to FIG. 7.

To this end, a code book in which vectors corresponding to previously executed prompts are clustered may be stored in the electronic device 1000 in advance. In addition, when the electronic device 1000 executes a new prompt, the code book may be updated according to the newly executed prompt.

In operation 2303, the electronic device 1000 may replace the obtained prompt with a prompt corresponding to the selected vector. In other words, the electronic device 1000 may change the obtained prompt to the shortest prompt.

Referring to FIG. 21 again, in operation 2102, the electronic device 1000 may search stored records of previously performed tasks based on the intent included in the simplified prompt. Information related to the previously performed tasks may be stored in a task database.

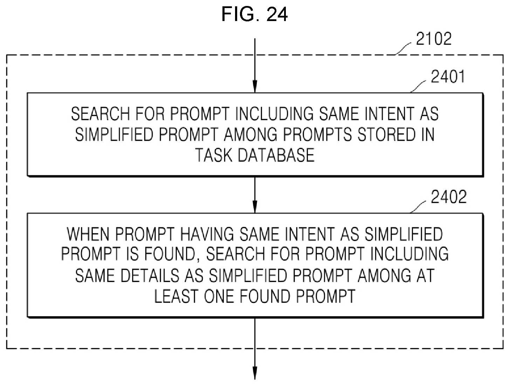

FIG. 24 is a flowchart to describe detailed operations include in operation 2102 of FIG. 21.

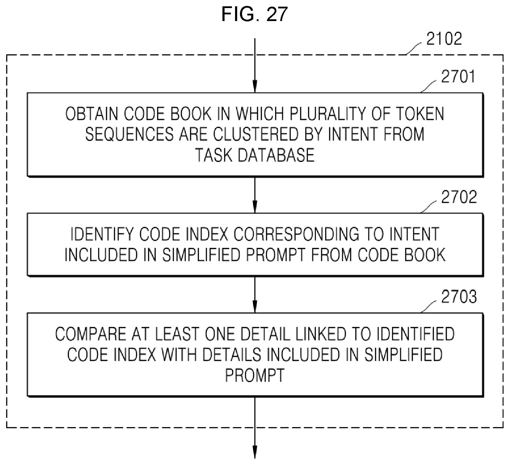

In operation 2401, the electronic device 1000 may search for a prompt including the same intent as the simplified prompt from prompts stored in the task database. The electronic device 1000 may search for a prompt by comparing embedding matrices, or may search for a prompt based on a code index. A method of searching for a prompt based on a code index is described below with reference to FIG. 27. A detailed method by which the electronic device 1000 searches for a prompt including the same intent as the simplified prompt is as described above with reference to FIGS. 10 to 15.

In operation 2402, when a prompt with the same intent as the simplified prompt is found, the electronic device 1000 may search for a prompt including the same details as the simplified prompt among at least one of the found prompts. In other words, based on identifying a prompt that includes the same intent as the simplified prompt, the electronic device (1000) may compare the details of the retrieved prompt with those of the simplified prompt. A detailed method by which the electronic device 1000 searches for a prompt including the same details as the simplified prompt is as described above with reference to FIGS. 10 to 15.

FIG. 27 is a flowchart to describe detailed operations included in operation 2102 of FIG. 21.

In operation 2701, the electronic device 1000 may obtain, from the task database, a code book in which a plurality of token sequences are clustered by intent. In operation 2702, the electronic device 1000 may identify a code index corresponding to the intent of the simplified prompt from the code book. In operation 2703, the electronic device 1000 may compare at least one detail linked to the identified code index with the details included in the simplified prompt.

Referring to FIG. 21 again, in operation 2103, the electronic device 1000 may check whether there is a history of performing a task corresponding to the intent included in the simplified prompt. When there is no history of performing a task corresponding to the intent included in the simplified prompt, operation 2105 is performed, and the electronic device 1000 may execute a generative model according to the simplified prompt.

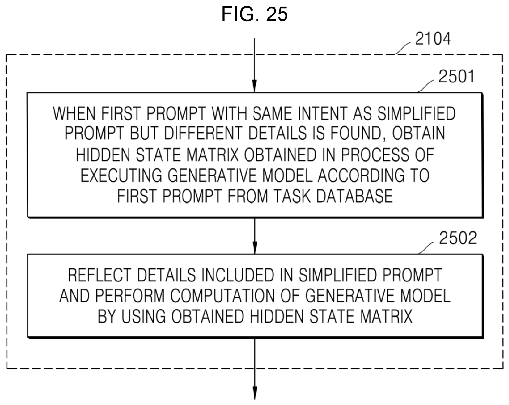

However, when there is a history of performing a task corresponding to the intent included in the simplified prompt, operation 2104 is performed, and the electronic device 1000 may execute a generative model according to the simplified protocol by using an intermediate computation result stored in a process of performing the task. In other words, based on identifying a stored record of a previously performed task corresponding to the intent of the simplified prompt, the electronic device 1000 may execute a generative model according to the simplified protocol by using an intermediate computation result corresponding to the previously performed task. That is, the electronic device 1000 may control the generative model to perform partial computation, which is described in detail with reference to FIGS. 25, 26, and 28.

FIGS. 25, 26, and 28 are flowcharts to describe detailed operations included in operation 2104 of FIG. 21.

Referring to FIG. 25, in operation 2501, when a first prompt with the same intent as the simplified prompt but different details is found, the electronic device 1000 obtain an HSM obtained in a process of executing the generative model according to the first prompt from the task database. For example, the electronic device 1000 may read an attention value matrix generated during a process of executing the first prompt from flash memory and store the attention value matrix in a cache memory, thereby allowing the generative model to use the attention value matrix during computation.

In operation 2502, the electronic device 1000 may reflect the details included in the simplified prompt and perform the computation of the generative model by using the obtained HSM. For example, the electronic device 1000 may convert the simplified prompt into an embedding matrix and change values of some elements of the HSM based on values of elements corresponding to the details in the embedding matrix.

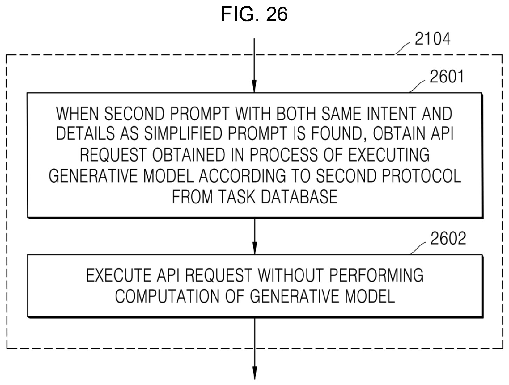

Referring to FIG. 26, in operation 2601, when a second prompt with both the same intent and details as the simplified prompt is found, the electronic device 1000 may obtain an API request obtained in a process of executing the generative model according to the second prompt from the task database.

In operation 2602, the electronic device 1000 may skip the computation of the generative model and execute the API request.

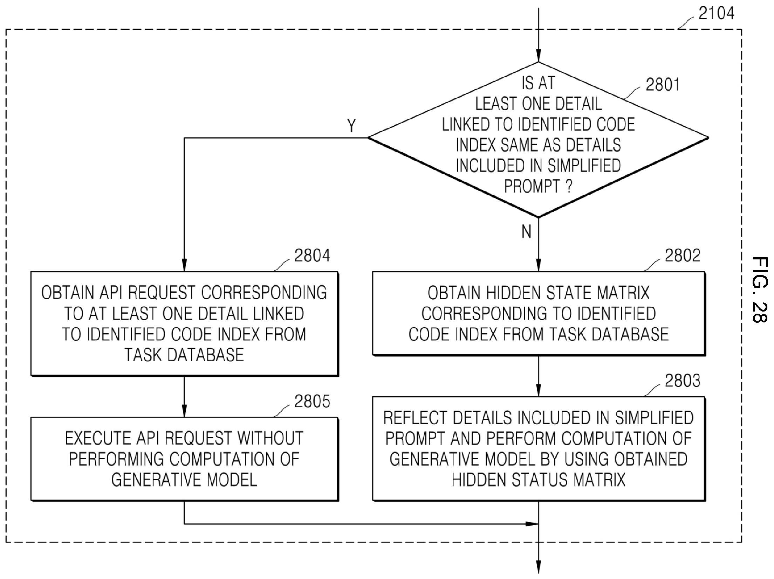

Referring to FIG. 28, in operation 2801, the electronic device 1000 may determine whether at least one detail linked to the identified code index is the same as the details included in the simplified prompt.

When it is determined not to be the same in a result of the determining in operation 2801, the electronic device 1000 may obtain an HSM corresponding to the identified code index from the task database. Then, in operation 2803, the electronic device 1000 may reflect the details included in the simplified prompt and perform the computation of the generative model by using the obtained HSM.

When it is determined to be the same in the result of the determining in operation 2801, in operation 2804, the electronic device 1000 may obtain an API request corresponding to at least one detail linked to the identified code index from the task database. Then, in operation 2805, the electronic device 1000 may skip the computation of the generative model and execute the API request.

Referring to FIG. 21 again, in operation 2106, the electronic device 1000 may output the execution result of the generative model.

According to the embodiments described above, the amount of computation required for a generative model may be reduced due to a reduction in the size of an embedding matrix corresponding to a prompt, and by omitting computations of some layers through the use of a pre-stored intermediate computation result. In addition, in a process of simplifying a prompt, the prompt becomes clearer and more concise, and thus an effect of the generative model operating efficiently may be expected.

According to an embodiment of the disclosure, a processing method of a generative model includes obtaining a prompt, simplifying the prompt into a simplified prompt including an intent and details, searching for stored records of previously performed tasks based on the intent of the simplified prompt, based on identifying a stored record of a previously performed task corresponding to the intent of the simplified prompt, executing the generative model according to the simplified prompt using an intermediate computation result corresponding to the previously performed task, and outputting an execution result of the generative model.

According to an embodiment of the disclosure, the simplifying the prompt may include extracting key tokens from a plurality of tokens included in the prompt, and reducing the number of tokens by performing vector quantization on a set of tokens indicating the intent among the extracted key tokens.

According to an embodiment of the disclosure, the simplifying the prompt may include converting the prompt into a vector, selecting a vector, from a code book for vector quantization, corresponding to the shortest prompt included in a same cluster as the converted vector, and changing the prompt to the shortest prompt.

According to an embodiment of the disclosure, information related to previously performed tasks and prompts corresponding to the previously performed tasks may be stored on a task database, and the searching for the stored records of the previously performed tasks may include searching for prompts that include the same intent as the simplified prompt among the prompts stored in the task database, and, based on identifying at least one prompt that includes the same intent as the simplified prompt, comparing at least one detail of the at least one prompt with the details of the simplified prompt.

According to an embodiment of the disclosure, the executing the generative model may include, based on identifying a first prompt that includes different details than the simplified prompt from the at least one prompt, obtaining a hidden state matrix corresponding to the first prompt, and changing the obtained hidden state matrix based on the details of the simplified prompt and performing computation of the generative model using the changed hidden state matrix.

According to an embodiment of the disclosure, the executing the generative model may include, based on identifying a second prompt that includes same details as the simplified prompt from the at least one prompt, obtaining an API request corresponding to the second prompt from the task database, and executing the API request without performing computation of the generative model.

According to an embodiment of the disclosure, information related to the previously performed tasks and prompts corresponding to the previously performed tasks may be stored on a task database, and wherein the searching for the stored records of the previously performed tasks may include obtaining a code book in which a plurality of token sequences are clustered by intent from the task database, identifying a code index corresponding to the intent of the simplified prompt from the code book, and comparing at least one detail linked to the identified code index with the details of the simplified prompt.

According to an embodiment of the disclosure, the executing the generative model may include, based on the at least one detail linked to the identified code index being different from the details of the simplified prompt, obtaining a hidden state matrix corresponding to the identified code index from the task database, and changing the obtained hidden state matrix based on the details of the simplified prompt and performing computation of the generative model using the changed hidden state matrix.

According to an embodiment of the disclosure, the executing the generative model may include, based on the at least one detail linked to the identified code index being same as the details of the simplified prompt, obtaining an API request corresponding to the at least one detail linked to the identified code index from the task database, and executing the API request without performing computation of the generative model.

An electronic device according to an embodiment of the disclosure may include a memory storing at least one instruction, and at least one processor, wherein the electronic device executes the at least one instruction stored in the memory by the at least one processor to obtain a prompt, simplify the prompt into a simplified prompt including an intent and details, search for stored records of previously performed tasks based on the intent of the simplified prompt, based on identifying a stored record of a previously performed task corresponding to the intent of the simplified prompt, execute the generative model according to the simplified prompt using an intermediate computation result corresponding to the previously performed task, and output an execution result of the generative model.

According to an embodiment of the disclosure, in the simplifying of the prompt, the electronic device extracts key tokens from a plurality of tokens included in the prompt, and reduces the number of tokens by performing vector quantization on a set of tokens indicating the intent among the extracted key tokens.

According to an embodiment of the disclosure, in the simplifying of the prompt, the electronic device converts the prompt into a vector, selects a shortest vector, from a code book for vector quantization, corresponding to a shortest prompt and included in a same cluster as the converted vector, and then changes the prompt to the shortest prompt.

According to an embodiment of the disclosure, information related to previously perform tasks and prompts corresponding to the previously performed tasks are stored in a task database, and in the searching for the stored records of the previously performed tasks, the electronic device searches for prompts that include the same intent as the simplified prompt among prompts stored in the task database, and based on identifying at least one prompt that includes the same intent as the simplified prompt, comparing at least one detail of the at least one prompt with the details of the simplified prompt.

According to an embodiment of the disclosure, in the executing of the generative model, the electronic device, based on identifying a first prompt that includes different details than the simplified prompt from the at least one prompt, obtains a hidden state matrix corresponding to the first prompt from the task database, and changes the obtained hidden state matrix based on the details of the simplified prompt and performs computation of the generative model using thechanged hidden state matrix.

According to an embodiment of the disclosure, in the executing of the generative model, the electronic device, based on identifying a second prompt that includes same details as the simplified prompt from the at least one prompt, obtains an API request corresponding to the second prompt from the task database, and then executes the API request without performing computation of the generative model.

According to an embodiment of the disclosure, information related to previously perform tasks and prompts corresponding to the previously performed tasks may be stored in the task database, and in the searching for the stored records of the previously performed tasks, the electronic device obtains a code book in which a plurality of token sequences are clustered by intent from the task database, identifies a code index that includes the same intent as the simplified prompt from the code book, and then compares at least one detail linked to the identified code index with details of the simplified prompt.

According to an embodiment of the disclosure, in the executing of the generative model, the electronic device,based on the at least one detail linked to the identified code index being different from the details of the simplified prompt, obtains a hidden state matrix corresponding to the identified code index from the task database, and changes the obtained hidden state matrix based on the details of the simplified prompt and performs computation of the generative model using the changed hidden state matrix.

According to an embodiment of the disclosure, in the executing of the generative model, the electronic device, based on the at least one detail linked to the identified code index being same as the details of the simplified prompt, obtains an API request corresponding to the at least one detail linked to the identified code index from the task database, and then executes the API request without performing computation of the generative model.

Various embodiments of the disclosure may be implemented or supported by one or more computer programs, and the computer programs may be formed from computer-readable program code and embodied in a computer readable medium. In the disclosure, "application" and "program" may refer to one or more computer programs, software components, sets of instructions, procedures, functions, objects, classes, instances, associated data, or portions thereof suitable for implementation in computer-readable program code. The "computer-readable program code) may include various types of computer code, including source code, object code, and executable code. A "computer-readable medium" may include various types of media that may be accessed by a computer, such as ROM, RAM, a hard disk drive (HDD), CD, DVD, or various types of memory.

In addition, a device-readable storage medium may be provided in a form of a non-transitory storage medium. Here, the 'non-transitory storage medium' is a tangible device, and may exclude wired, wireless, optical, or other communication links that transmit transitory electrical or other signals. The 'non-transitory storage medium' does not distinguish between cases where data is stored semi-permanently on the storage medium and cases where the data is stored temporarily. For example, the 'non-transitory storage medium' may include a buffer in which data is temporarily stored. The computer-readable media may be any available media that may be accessed by a computer, ad may include both volatile and non-volatile media, and removable and non-removable media. The computer-readable media include media on which data may be permanently stored and media on which data may be stored and later overwritten, such as including a rewritable optical disk or an erasable memory device.

According to an embodiment of the disclosure, the methods according to various embodiments of the disclosure may be provided as included in a computer program product. The computer program product may be traded between sellers and buyers as commodities. The computer program product may be distributed in the form of a device-readable storage medium (e.g., CD-ROM), or may be distributed online (e.g., downloading or uploading) via an application store or directly between two user devices (e.g., smartphones). In the case of online distribution, at least a portion of the computer program product (e.g., a downloadable app) may be temporarily stored or temporarily generated in a device-readable storage medium, such as the memory of a manufacturer's server, an application stores' server, or an intermediary server.

While one or more embodiments have been described with reference to the figures, it will be understood by those of ordinary skill in the art that various changes in form and details may be made therein without departing from the spirit and scope as defined by the following claims. For example, suitable results may be achieved even when the described techniques are performed in a different order from the described methods, and/or even when the components of the described system, structure, device, circuit, or the like are coupled or combined in a different form from the described methods, or even when the components are replaced or substituted by other components or equivalents. It should be understood that embodiments described herein should be considered in a descriptive sense only and not for purposes of limitation. For example, each component described as a single entity may be implemented in a distributed manner, and similarly, components described as distributed may be implemented in a combined manner.

The scope of the disclosure is not by the detailed description of the disclosure but by the appended claims, and all differences within the scope will be construed as being included in the disclosure.

## Claims

1. A processing method of a generative model, the method comprising:
obtaining a prompt;
simplifying the prompt into a simplified prompt including an intent and details;
searching for stored records of previously performed tasks, based on the intent of the simplified prompt;
based on identifying a stored record of a previously performed task corresponding to the intent of the simplified prompt, executing the generative model according to the simplified prompt using an intermediate computation result corresponding to the previously performed task; and
outputting an execution result of the generative model.

2. The method of claim 1, wherein the simplifying the prompt comprises:
extracting key tokens from a plurality of tokens included in the prompt; and
reducing a number of tokens by performing vector quantization on a set of tokens indicating the intent among the extracted key tokens.

3. The method of any one of claims 1 and 2, wherein the simplifying the prompt comprises:
converting the prompt into a vector;
selecting a vector, from a code book for vector quantization, corresponding to a shortest prompt included in a same cluster as the converted vector; and
changing the prompt to the shortest prompt.

4. The method of any one of claims 1 to 3, wherein information related to the previously performed tasks and prompts corresponding to the previously performed tasks are stored on a task database, and
wherein the searching for the stored records of previously performed tasks comprises:
searching for prompts that include the same intent as the simplified prompt among the prompts stored in the task database; and
based on identifying at least one prompt that includes the same intent as the simplified prompt, comparing at least one detail of the at least one prompt with the details of the simplified prompt.

5. The method of any one of claims 1 to 4, wherein the executing the generative model comprises:
based on identifying a first prompt that includes different details than the simplified prompt from the at least one prompt, obtaining, from the task database, a hidden state matrix corresponding to the first prompt; and
changing the obtained hidden state matrix based on the details of the simplified prompt, and performing computation of the generative model using the changed hidden state matrix.

6. The method of any one of claims 1 to 5, wherein the executing the generative model comprises:
based on identifying a second prompt that includes same details as the simplified prompt from the at least one prompt, obtaining, from the task database, an Application Programming Interface (API) request corresponding to the second prompt; and
executing the API request without performing computation of the generative model.

7. The method of any one of claims 1 to 6, wherein information related to the previously performed tasks and prompts corresponding to the previously performed tasks are stored on a task database, and
wherein the searching for the stored records of previously performed tasks comprises:
obtaining, from the task database, a code book in which a plurality of token sequences are clustered by intent;
identifying a code index corresponding to the intent of the simplified prompt, from the code book; and
comparing at least one detail linked to the identified code index with the details of the simplified prompt.

8. The method of any one of claims 1 to 7, wherein the executing the generative model comprises:
based on the at least one detail linked to the identified code index being different from the details of the simplified prompt, obtaining, from the task database, a hidden state matrix corresponding to the identified code index; and
changing the obtained hidden state matrix based on the details of the simplified prompt, and performing computation of the generative model using the changed hidden state matrix.

9. The method of any one of claims 1 to 8, wherein the executing the generative model comprises:
based on the at least one detail linked to the identified code index being same as the details of the simplified prompt, obtaining, from the task database, an API request corresponding to the at least one detail linked to the identified code index; and
executing the API request without performing computation of the generative model.

10. An electronic device 1000 comprising:
memory 1400 storing at least one instruction; and
at least one processor 1300 including processing circuitry,
wherein the at least one processor 1300 individually or collectively executes the at least one instruction stored in the memory 1400 to cause the electronic device 1000 to:
obtain a prompt;
simplify the prompt into a simplified prompt including an intent and details;
search for stored records of previously performed tasks, based on the intent of the simplified prompt;
based on identifying a stored record of a previously performed task corresponding to the intent of the simplified prompt, execute a generative model according to the simplified prompt using an intermediate computation result corresponding to the previously performed task; and
output an execution result of the generative model 300.

11. The electronic device of claim 10, wherein the at least one processor 1300 is further configured to execute the at least one instruction to cause the electronic device 1000 to, in the simplifying the prompt,
extract key tokens from a plurality of tokens included in the prompt, and
reduce a number of tokens by performing vector quantization on a set of tokens indicating intent among the extracted key tokens.

12. The electronic device of any one of claims 10 and 11, wherein the at least one processor 1300 is further configured to execute the at least one instruction to cause the electronic device 1000 to, in the simplifying the prompt,
convert the prompt into a vector,
select a shortest vector, from a code book for vector quantization, corresponding to a shortest prompt included in a same cluster as the converted vector, and
change the prompt to the shortest prompt.

13. The electronic device of any one of claims 10 to 12, wherein information related to the previously performed tasks and prompts corresponding to the previously performed tasks are stored in a task database, and
wherein the at least one processor 1300 is further configured to execute the at least one instruction to cause the electronic device 1000 to, in the searching for the stored records of the previously performed tasks,
search for prompts that include the same intent as the simplified prompt among prompts stored in the task database 500, and
based on identifying at least one prompt that includes the same intent as the simplified prompt, comparing at least one detail of the at least one prompt with the details of the simplified prompt.

14. The electronic device of any one of claims 10 to 13, wherein the at least one processor 1300 is further configured to execute the at least one instruction to cause the electronic device 1000 to, in the executing the generative model,
based on identifying a first prompt that includes different details than the simplified prompt from the at least one prompt, obtain, from the task database 500, a hidden state matrix corresponding to the first prompt, and
changing the obtained hidden state matrix based on the details of the simplified prompt, and perform computation of the generative model 300 using the changed hidden state matrix.

15. The electronic device of any one of claims 10 to 14, wherein the at least one processor 1300 is further configured to execute the at least one instruction to cause the electronic device 1000 to, in the executing the generative model 300,
based on identifying a second prompt that includes same details as the simplified prompt from the at least one prompt, obtain, from the task database 500, an Application Programming Interface (API) request corresponding to the second prompt, and
execute the API request without performing computation of the generative model.
